(19) Europäisches Patentamt / European Patent Office / Office européen des brevets

(11) **EP 4 306 582 B1**

(12) **EUROPEAN PATENT SPECIFICATION**

(45) Date of publication and mention
of the grant of the patent:
**03.09.2025 Bulletin 2025/36**

(21) Application number: **22767270.6**

(22) Date of filing: **11.03.2022**

(51) International Patent Classification (IPC):
**C08J 9/18** *(2006.01)*  **B29C 44/00** *(2006.01)*
**B29C 44/44** *(2006.01)*  **C08J 9/16** *(2006.01)*
**C08K 3/04** *(2006.01)*  **C08L 23/00** *(2006.01)*
**C08L 23/10** *(2006.01)*  **B29K 23/00** *(2006.01)*
**B29K 105/04** *(2006.01)*

(52) Cooperative Patent Classification (CPC):
(C-Sets available)
**B29C 44/44; B29C 44/3461; C08J 3/126;**
**C08J 9/0066; C08J 9/122; C08J 9/18; C08J 9/232;**
B29K 2023/00; B29K 2023/12; B29K 2105/04;
C08J 2201/03; C08J 2201/034; C08J 2203/06;
C08J 2323/14; C08J 2323/16;          (Cont.)

(86) International application number:
**PCT/JP2022/010913**

(87) International publication number:
**WO 2022/191316 (15.09.2022 Gazette 2022/37)**

(54) **METHOD FOR PRODUCING POLYPROPYLENE RESIN FOAM PARTICLES, AND METHOD FOR PRODUCING FOAM PARTICLE MOLDED BODY**

VERFAHREN ZUR HERSTELLUNG VON POLYPROPYLENHARZSCHAUMPARTIKELN UND VERFAHREN ZUR HERSTELLUNG EINES SCHAUMPARTIKELFORMKÖRPERS

PROCÉDÉ DE PRODUCTION DE PARTICULES DE MOUSSE DE RÉSINE DE POLYPROPYLÈNE, ET PROCÉDÉ DE PRODUCTION DE CORPS MOULÉ DE PARTICULES DE MOUSSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **12.03.2021 JP 2021040841**
**12.03.2021 JP 2021040849**
**09.06.2021 JP 2021096402**
**06.08.2021 JP 2021130245**
**28.09.2021 JP 2021157789**
**29.09.2021 JP 2021159885**
**12.10.2021 JP 2021167457**
**13.10.2021 JP 2021168308**
**26.01.2022 JP 2022010160**

(43) Date of publication of application:
**17.01.2024 Bulletin 2024/03**

(73) Proprietor: **JSP Corporation**
**Tokyo 100-0005 (JP)**

(72) Inventors:
• **SAKAMURA, Takumi**
**Kanuma-shi, Tochigi 322-0014 (JP)**
• **OHTA, Hajime**
**Kanuma-shi, Tochigi 322-0014 (JP)**

(74) Representative: **Kramer Barske Schmidtchen Patentanwälte PartG mbB**
**European Patent Attorneys**
**Landsberger Strasse 300**
**80687 München (DE)**

(56) References cited:
WO-A1-2016/060162     JP-A- 2006 232 939
JP-A- 2006 232 939     JP-A- 2017 019 980
JP-A- 2018 162 369     JP-A- 2018 162 369
JP-A- 2019 163 426     US-A1- 2017 218 158

EP 4 306 582 B1

(52) Cooperative Patent Classification (CPC): (Cont.)
C08J 2423/06; C08J 2423/14; C08K 2201/006;
C08L 2203/14

C-Sets
**C08K 3/04, C08L 23/10**

**Description**

TECHNICAL FIELD

The present invention relates to a method for producing a polypropylene-based resin expanded bead and a method for producing a molded article of expanded beads.

BACKGROUND ART

A molded article of expanded beads comprising polypropylene-based resin expanded beads is lightweight and excellent in cushioning property, rigidity, and the like, and thus is used for various applications. The molded article of expanded beads is produced by, for example, a method called an in-mold molding method in which a mold for molding is filled with polypropylene-based resin expanded beads, and then a heating medium such as steam is supplied into the mold to perform heating. In the in-mold molding method, when the heating medium is supplied into the mold, the expanded beads are secondarily expanded and surfaces thereof are melted. As a result, the expanded beads in the mold are mutually fusion bonded, so that a molded article having a shape corresponding to a shape of a cavity of the mold can be obtained. The molded article immediately after molding tends to swell due to secondary expansion. Thus, the molded article is cooled with water, air, or the like in the mold and then released from the mold.

Polypropylene-based resin expanded beads used for production of the molded article of the expanded beads (also referred to as expanded beads molded article) are often produced by a method in which polypropylene-based resin particles dispersed in a dispersion medium in a sealed container are impregnated with an inorganic physical blowing agent, and then the resin particles are released together with the dispersion medium from the sealed container to an environment having a lower pressure than that of the sealed container. Note that such an expanding method is sometimes referred to as a "direct expanding method".

For example, Patent Literature 1 describes a method in which polypropylene-based resin colored particles to which a coloring pigment has been added are expanded by the direct expanding method to prepare expanded beads, and then the expanded beads are molded by in-mold molding to prepare a molded article of polypropylene-based resin colored expanded beads. As the coloring pigment added to the polypropylene-based resin colored particles, carbon black is used in some cases from the viewpoint of giving a luxurious feeling to the molded article.

Patent Literature 2 describes a method for producing polypropylene resin foamed beads comprising a two-step foaming, the beads comprising polypropylene resin and carbon black.

PRIOR ART LITERATURE

Patent Literature

Patent Literature 1: JP-A-07-300537
Patent Literature 2: JP 2018 162369 A

SUMMARY OF INVENTION

PROBLEMS TO BE SOLVED BY INVENTION

In recent years, the expanded beads molded article has been used for various purposes, and an expanded beads molded article having higher blackness and an expanded beads molded article having less color unevenness are required in some cases. In the method of Patent Literature 1, the blackness decreases or color unevenness occurs, and thus there is room for improvement in blackness and color unevenness. In addition, when a blending amount of carbon black is increased in order to improve blackness and color unevenness, a need to increase a molding temperature in order to obtain a good expanded beads molded article may be generated from the viewpoint of fusion bondability, and a cooling time may become long to deteriorate the productivity.

Furthermore, in the method of Patent Literature 1, there is room for improvement in a filling property of expanded beads into a mold, and filling of the expanded beads into the mold may become insufficient in a case of increasing the blending amount of carbon black or depending on a shape or molding conditions of an expanded beads molded article to be obtained, leading to deterioration of a surface property of the expanded beads molded article. In addition, in a case of in-mold molding using expanded beads having a large bulk ratio in order to obtain a lighter weight expanded beads molded article, the above-described problems of blackness and filling property are more remarkable.

The present invention has been made in view of such a background, and is directed to providing a method for producing a polypropylene-based resin expanded bead that has an excellent filling property and makes it possible to mold a good expanded beads molded article having high blackness and less noticeable color unevenness, and a method for producing an expanded beads molded article using the polypropylene-based resin expanded beads.

MEANS FOR SOLVING PROBLEM

One aspect of the present invention is a method for producing a polypropylene-based resin expanded bead, the method comprising:

a dispersing step of dispersing polypropylene-based resin particles in a dispersion medium, the polypropylene-based resin particles each including

a core layer comprising a polypropylene-based resin as a base resin, and carbon black blended into the polypropylene-based resin in an amount of 0.1 parts by mass or more and less than 5 parts by mass with respect to 100 parts by mass of the polypropylene-based resin, and
a covering layer, which covers the core layer, comprising a polyolefin-based resin as a base resin, and carbon black blended into the polyolefin-based resin in an amount of 0.1 parts by mass or more and less than 5 parts by mass with respect to 100 parts by mass of the polyolefin-based resin;

a first expanding step of impregnating the polypropylene-based resin particles in the dispersion medium with an inorganic physical blowing agent in a sealed container, and then releasing the polypropylene-based resin particles together with the dispersion medium from the sealed container into an atmosphere having a lower pressure than a pressure inside the sealed container to thereby expand the core layer of each of the polypropylene-based resin particles to obtain first-step expanded beads having a bulk ratio of 5 times or more and 25 times or less; and
a second expanding step of further expanding the first-step expanded beads by heating the first-step expanded beads after increasing a pressure in cells of the first-step expanded beads to obtain polypropylene-based resin expanded beads, wherein
a ratio $M_2/M_1$ of a bulk ratio $M_2$ of the polypropylene-based resin expanded beads to a bulk ratio $M_1$ of the first-step expanded beads is 1.2 or more and 3.0 or less.

Another aspect of the present invention is a method for producing a molded article of expanded beads, the method comprising filling the polypropylene-based resin expanded beads obtained by the method according to the above-mentioned aspect into a mold for molding, and thereafter performing in-mold molding of the expanded beads by supplying a heating medium into the mold to produce a molded article of the polypropylene-based resin expanded beads.

EFFECTS OF INVENTION

According to the above aspects, it is possible to provide a method for producing a polypropylene-based resin expanded bead that has an excellent filling property and makes it possible to mold a good expanded beads molded article having high blackness, and less noticeable color unevenness, and a method for producing an expanded beads molded article using the polypropylene-based resin expanded beads.

BRIEF DESCRIPTION OF DRAWINGS

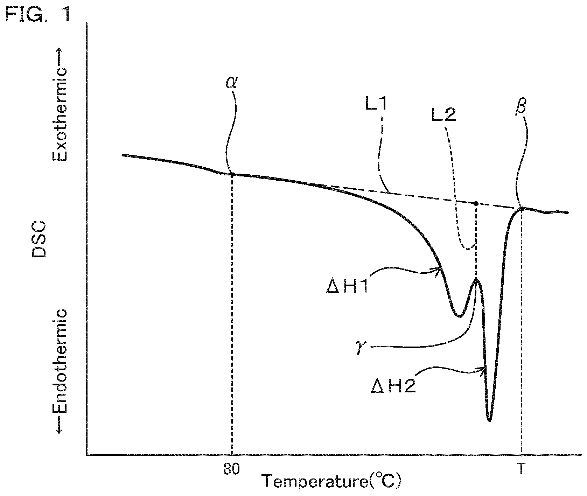

FIG. 1 is an explanatory diagram showing a method for calculating a high temperature peak.

MODE FOR CARRYING OUT INVENTION

(Method for producing polypropylene-based resin expanded beads)

As described above, the method for producing polypropylene-based resin expanded beads (hereinafter, referred to as "expanded beads" or "second-step expanded beads") includes: a dispersing step of dispersing the specific polypropylene-based resin particles (hereinafter, referred to as "resin particles") in a dispersion medium; a first expanding step of expanding a core layer of each of the resin particles to obtain first-step expanded beads in such a manner that a bulk ratio $M_1$ is 5 times or more and 25 times or less; and a second expanding step of expanding the first-step expanded beads to obtain the second-step expanded beads in such a manner that a ratio $M_2/M_1$ of a bulk ratio $M_2$ of the second-step expanded beads to the bulk ratio $M_1$ of the first-step expanded beads is 1.2 or more and 3.0 or less. By expanding the specific polypropylene-based resin particles in two steps in this manner, it is possible to easily obtain expanded beads having high blackness, small variation in color tone, and an excellent filling property. Furthermore, according to the expanded beads thus obtained, it is possible to easily obtain an expanded beads molded article (hereinafter, referred to as a "molded article") which is lightweight, excellent in surface property, high in blackness, and inconspicuous in color unevenness.

In the production method, a resin particle is used which includes a core layer containing a polypropylene-based resin as a base resin and a covering layer covering the core layer, and in which a predetermined amount of carbon black is blended as a black colorant in the core layer and the covering layer. In a case where the resin particle does not have a covering layer, it may be difficult to mold the expanded beads at a low molding temperature. Moreover, in the case where the resin particle does not have a covering layer, the filling property of the expanded beads may be deteriorated, and thus the surface property of the expanded beads molded article may be deteriorated depending on molding conditions or the like.

A blending amount of carbon black in the core layer is 0.1 parts by mass or more and less than 5 parts by mass with respect to 100 parts by mass of the polypropylene-based resin. A blending amount of carbon black in the covering layer is 0.1 parts by mass or more and less than 5 parts by mass with respect to 100 parts by mass of the polyolefin-based resin.

In a case where the blending amount of carbon black in the core layer is too small, there is a possibility that the blackness of the expanded beads molded article obtained using the expanded beads is lowered and the variation in color tone is increased. When the blending amount of the carbon black in the core layer is set to 0.1 parts by mass or more, preferably 0.5 parts by mass or more, more preferably 1.0 part by mass or more, and still more preferably 2.0 parts by mass or more with respect to 100 parts by mass of the polypropylene-based resin, expanded beads capable of molding an expanded beads molded article having a desired color tone can be easily obtained.

On the other hand, in a case where the blending amount of carbon black in the core layer is too large, it may be difficult to mold the expanded beads at a low molding temperature. In addition, in the case where the blending amount of carbon black in the core layer is too large, a time required for cooling the molded article in the mold may become long. These problems can be easily avoided by setting the blending amount of carbon black in the core layer to less than 5.0 parts by mass, preferably 4.5 parts by mass or less, more preferably 4.0 parts by mass or less, and still more preferably 3.5 parts by mass or less with respect to 100 parts by mass of the polypropylene-based resin.

In a case where the blending amount of carbon black in the covering layer is too small, there is a possibility that the blackness of the expanded beads molded article obtained using the expanded beads is lowered and the variation in color tone is increased. In addition, in the case where the blending amount of carbon black in the covering layer is too small, the filling property of the expanded beads may be lowered. When the blending amount of the carbon black in the covering layer is set to 0.1 parts by mass or more, preferably 0.5 parts by mass or more, more preferably 1.0 part by mass or more, and still more preferably 2.0 parts by mass or more with respect to 100 parts by mass of the polyolefin-based resin, expanded beads capable of molding an expanded beads molded article having a desired color tone, and excellent in filling property can be easily obtained.

On the other hand, in a case where the blending amount of carbon black in the covering layer is too large, it may be difficult to mold the expanded beads at a low molding temperature. In addition, in the case where the blending amount of carbon black in the covering layer is too large, the filling property of the expanded beads may be lowered. These problems can be easily avoided by setting the blending amount of carbon black in the covering layer to less than 5.0 parts by mass, preferably 4.5 parts by mass or less, more preferably 4.0 parts by mass or less, and still more preferably 3.5 parts by mass or less with respect to 100 parts by mass of the polyolefin-based resin.

Carbon black is preferably uniformly dispersed in the entire resin component constituting the covering layer, from the viewpoint of easily obtaining expanded beads having high blackness and little variation in color tone with a smaller blending amount of the carbon black and from the viewpoint of further improving the filling property of the expanded beads.

In addition, the blending amount of carbon black in the covering layer and the blending amount of carbon black in the core layer are preferably about the same. More specifically, a mass ratio of the blending amount of carbon black in the covering layer to the blending amount of carbon black in the core layer is preferably 0.8 or more and 1.2 or less, preferably 0.9 or more and 1.1 or less, and most preferably 1, that is, the blending amount of carbon black in the core layer is equal to the blending amount of carbon black in the covering layer. By reducing a difference between the blending amount of carbon black in the core layer and the blending amount of carbon black in the covering layer, the blackness of the expanded beads can be further increased, and the variation in color tone can be further reduced.

The carbon black blended in the core layer and the covering layer of expanded bead is a black colorant, and is a material different from, for example, conductive carbon black in that the effect can be exhibited with a relatively small blending amount as described above. Furthermore, by setting the blending amount of carbon black in the covering layer to 0.1 parts by mass or more and less than 5 parts by mass with respect to 100 parts by mass of the polyolefin-based resin, an effect of enhancing the filling property of the expanded beads while having good moldability can be achieved.

As the carbon black, for example, channel black, roller black, furnace black, thermal black, acetylene black, Ketjen black, or the like can be used. From the viewpoint of excellent balance between dispersibility in a polypropylene-based resin and a material cost, furnace black is preferable as the carbon black.

A dibutyl phthalate (that is, DBP) oil absorption amount of the carbon black is preferably less than 150 mL/100 g, more preferably 140 mL/100 g or less, still more preferably 130 mL/100 g or less, particularly preferably 120 mL/100 g or less, and most preferably 110 mL/100 g or less. By using such carbon black, it is possible to obtain an expanded beads molded article having high blackness with a relatively small blending amount of the carbon black, and it is possible to more easily obtain expanded beads excellent in filling property. Note that the DBP oil absorption amount described above is a value measured in accordance with ASTM D 2414-79.

In addition, a BET specific surface area of the carbon black is preferably 200 $m^2$/g or less, more preferably 150 $m^2$/g or less, and still more preferably 100 $m^2$/g or less. By using such carbon black, it is possible to more easily obtain expanded beads that have desired blackness and is excellent in filling property. Note that the BET specific surface area of carbon black is a value measured by the BET method in accordance with ASTM D-3037.

In the first expanding step, the core layer of each resin particle is expanded in such a manner that the bulk ratio $M_1$ of the first-step expanded beads is 5 times or more and 25 times or less. In the first expanding step, the core layer of each resin particle is mainly expanded to form an expanded layer, whereby the filling property of the expanded beads and the blackness of the finally obtained expanded beads molded article can be enhanced, and variation in color tone can be reduced. On the other hand, when the covering layer is in a foamed state, the above-described action and effect may be impaired. Thus, it is preferable that the covering layer is not substantially expanded in the first expanding step.

That is, it is preferable that the first-step expanded bead obtained by the first expanding step includes an expanded layer, which is in a foamed state, containing a polypropylene-based resin as a base resin and carbon black blended therein in the specific amount, and a covering layer that is in a non-foamed state and covers the expanded layer, the base resin of the covering layer is a polyolefin-based resin, and the specific amount of carbon black is added to the covering layer. Note that the "non-foamed state" described above means that the covering layer has almost no cell structure therein, including a state that the covering layer has not expanded and thus contains no cell therein, and a state that cells disappear after expansion of the particle.

In a case where the bulk ratio $M_1$ of the first-step expanded beads is too low, it is necessary to expand the first-step expanded beads at a high ratio in the second expanding step in order to obtain expanded beads having a desired bulk ratio. As a result, there is a possibility that the closed cell content of the second-step expanded beads is lowered and blocking occurs between the expanded beads in the second expanding step. By setting the bulk ratio $M_1$ of the first-step expanded beads to 5 times or more, preferably 8 times or more, more preferably 10 times or more, and still more preferably 12 times or more, these problems can be easily avoided.

On the other hand, in a case where the bulk ratio $M_1$ of the first-step expanded beads is too high, it is difficult to obtain the effect by expanding the resin particles in two steps. Specifically, the finally obtained expanded beads molded article may have lowered blackness and increased variation in color tone. By setting the bulk ratio $M_1$ of the first-step expanded beads to 25 times or less, preferably 20 times or less, and more preferably 18 times or less, these problems can be easily avoided.

In a case where the ratio $M_2/M_1$ of the bulk ratios is too low, it is difficult to obtain the effect by expanding the resin particles in two steps. As a result, the expanded beads may have lowered blackness and increased variation in color tone. By setting the ratio $M_2/M_1$ of the bulk ratios to 1.2 or more, preferably 1.4 or more, more preferably 1.8 or more, and still more preferably 2.0 or more, these problems can be easily avoided.

On the other hand, in a case where the ratio $M_2/M_1$ of the bulk ratios is too high, there is a possibility that the closed cell content of the second-step expanded beads is lowered and blocking occurs between the expanded beads in the second expanding step. These problems can be easily avoided by setting the ratio $M_2/M_1$ of the bulk ratios to 3.0 or less, and preferably 2.8 or less.

The bulk ratio $M_1$ of the first-step expanded beads is a value obtained by dividing a density (unit: kg/$m^3$) of the polypropylene-based resin constituting the expanded layer of the first-step expanded bead, that is, the layer formed by expanding the core layer of the resin particle by the bulk density (unit: kg/$m^3$) of the first-step expanded beads. The bulk ratio $M_2$ of the expanded beads is a value obtained by dividing a density (unit: kg/$m^3$) of the polypropylene-based resin constituting the expanded layer of the expanded bead, that is, the layer corresponding to the core layer of the resin particle by the bulk density (unit: kg/$m^3$) of the expanded beads. Note that the method for measuring the bulk densities of the first-step expanded beads and the expanded beads will be described below.

In the production method, expanded beads are produced by performing expanding processes in two steps (i.e., two-step expanding) including the first expanding step and the second expanding step, and adjusting the bulk ratio of the expanded beads obtained in each expanding step to the predetermined range and relationship. The expanded beads obtained by performing such two-step expanding enable production of a molded body having high blackness and little color unevenness. The reason for this is considered as follows.

In the related art, an expanded beads molded article produced using polypropylene-based resin expanded beads produced by a direct expanding method has a tendency that the blackness is easily reduced and color unevenness is easily noticeable. This tendency is particularly remarkable in a case of attempting expansion of the particles to a desired bulk ratio by only one expanding. As one factor of this tendency, it is considered that while a large number of cells are formed at the time of expanding, cells in the vicinity of the surfaces of the expanded beads are strongly affected by cooling, and as a result, the number of cells in the vicinity of the surfaces excessively increases.

In contrast, in the above-described production method, the direct expanding method is used for the first expanding step in which the bulk ratio $M_1$ of the first-step expanded beads in the step is reduced, and the second expanding step is additionally performed, in which the bulk ratio $M_2$ of the expanded beads can be increased to a desired ratio in a range in which the specific relationship with the bulk ratio $M_1$ is satisfied. Thus, through the expanding processes in two steps as mentioned above, expanded beads having a desired bulk ratio can be obtained with avoiding an excessive increase in the number of cells on the surface.

Consequently, it can be considered that expanded beads having high blackness and small variation in color tone can be obtained according to the above-described production method. In particular, according to the above-described production method, for example, even in the case of expanded beads having a bulk ratio of more than 30 times, it is possible to prevent a decrease in blackness and occurrence of color unevenness.

In a case of producing expanded beads having a desired bulk ratio $M_2$, from the viewpoint of easily obtaining expanded beads capable of molding a molded article having higher blackness and less color unevenness, it is preferable to further decrease the bulk ratio $M_1$ of the first-step expanded beads and further increase the ratio $M_2/M_1$ of the bulk ratios in the second expanding step. Specifically, it is preferable that the bulk ratio $M_1$ of the first-step expanded beads is 5 times or more and 20 times or less, and the ratio $M_2/M_1$ of the bulk ratios is 1.4 or more and 3.0 or less, and it is more preferable that the bulk ratio $M_1$ of the first-step expanded beads is 10 times or more and 18 times or less, and the ratio $M_2/M_1$ of the bulk ratios is 1.8 or more and 3.0 or less.

Furthermore, in the above-described production method, by producing the expanded beads by the method including the first expanding step and the second expanding step described above, for example, the filling property of the expanded beads obtained is enhanced as compared with the case where the particles are expanded to a desired bulk ratio by one expanding. The reason why such an operational effect can be obtained is not clear at the present time, but for example, it is considered, as the reason, that fluidity of the expanded beads is improved by the covering layer containing the specific amount of carbon black in the non-foamed state, an uneven state of the expanded beads changes in the second expanding step, etc.

Hereinafter, each step of the method for producing expanded beads will be described in detail.

<Dispersing step >

In the dispersing step, the polypropylene-based resin particles are dispersed in a dispersion medium.

The core layer of the resin particle is composed of a polypropylene-based resin. The polypropylene-based resin described above corresponds to a homopolymer of a propylene monomer and a propylene-based copolymer containing 50 mass% or more of structural units derived from propylene. The polypropylene-based resin is preferably a propylene-based copolymer obtained by copolymerizing propylene with the other monomer(s). Preferable examples of the propylene-based copolymer include copolymers of propylene and an $\alpha$-olefin having 4 to 10 carbon atoms, such as an ethylene-propylene copolymer, a propylene-butene copolymer, a hexene-propylene copolymer, and an ethylene-propylene-butene copolymer. These copolymers are, for example, random copolymers or block copolymers, and are preferably random copolymers. The core layer may contain a plurality of types of polypropylene-based resins. From the viewpoint of further enhancing the moldability of the expanded beads, the polypropylene-based resin constituting the core layer is preferably any of an ethylene-propylene random copolymer, an ethylene-propylene-butene random copolymer, or a propylene-butene copolymer.

The core layer may contain a polymer other than the polypropylene-based resin, as long as the above-described operational effect are not impaired. Examples of the other polymer include thermoplastic resins other than polypropylene-based resins, such as polyethylene-based resins and polystyrene-based resins, and elastomers. The content of the other polymer in the core layer is preferably 20 mass% or less, more preferably 10 mass% or less, still more preferably 5 mass% or less, and 0 mass%, that is, it is particularly preferable that the core layer substantially contains only the polypropylene-based resin as a polymer.

The polypropylene-based resin constituting the core layer is preferably an ethylene-propylene random copolymer containing 0.5 mass% or more and 5.0 mass% or less of an ethylene component. According to the expanded beads obtained by expanding such resin particles, the rigidity of the molded article can be further enhanced, and a molded article having a good surface property can be formed at a lower molding temperature. Note that the total of the ethylene component and the propylene component in the ethylene-propylene random copolymer is 100 mass%.

The content of the ethylene component in the copolymer is more preferably 4.5 mass% or less, still more preferably 4.0 mass% or less, and particularly preferably 3.5 mass% or less, from the viewpoint of further enhancing the rigidity of the molded article. On the other hand, from the viewpoint of avoiding an excessive increase in the molding pressure of the expanded beads, the content of the ethylene component in the copolymer is preferably 0.5 mass% or more.

Furthermore, from the viewpoint that a good molded article can be molded at a still lower molding temperature (i.e., a low molding pressure), the content of the ethylene component in the copolymer is more preferably 1.0 mass% or more, still more preferably 1.2 mass% or more, even more preferably 1.5 mass% or more, and particularly preferably more than 2.0 mass%.

From the viewpoint of further enhancing the moldability of the expanded beads to be obtained and further shortening the water cooling time during molding, the polypropylene-based resin as the base resin of the core layer is an ethylene-propylene-butene copolymer or a propylene-butene copolymer, and the butene component content in these copolymers is more preferably 2 mass% or more and 15 mass% or less, and more preferably 5 mass% or more and 12 mass% or less.

From the same viewpoint, it is preferable that the polypropylene-based resin as the base resin of the core layer is an ethylene-propylene-butene copolymer, the total amount of the butene component content and the ethylene component content in the copolymer is 2 mass% or more and 15 mass% or less, and a mass ratio of the butene component content to the ethylene component content (butene component content/ethylene component content) is 0.5 or more. The mass ratio of the butene component content to the ethylene component content (butene component content/ethylene component content) is preferably 2 or more, more preferably 5 or more, and still more preferably 10 or more. The upper limit thereof is preferably 30 and more preferably 20. Note that the total of the butene component content, the ethylene component content, and the propylene component content in the copolymer is 100 mass%.

The contents of the monomer components in the copolymer can be determined by IR spectrum measurement. The ethylene component, the propylene component, and the butene component in the copolymer mean a structural unit derived from ethylene, a structural unit derived from propylene, and a structural unit derived from butene in the copolymer, respectively. The content of each monomer component in the copolymer means the content of a structural unit derived from each monomer in the copolymer.

As described above, 0.1 parts by mass or more and less than 5 parts by mass of carbon black is added to the polypropylene-based resin constituting the core layer with respect to 100 parts by mass of the polypropylene-based resin. The polypropylene-based resin may contain an additive such as a cell adjusting agent, a crystal nucleating agent, a flame retardant, a flame retardant aid, a plasticizer, an antistatic agent, an antioxidant, an ultraviolet inhibitor, a light stabilizer, or an antibacterial agent as long as the above-described action and effect are not impaired. The content of the additive in the core layer is preferably, for example, 0.01 parts by mass or more and 1 part by mass or less with respect to 100 parts by mass of the polypropylene-based resin.

The polypropylene-based resin constituting the core layer preferably contains one or more metal borates selected from zinc borate and magnesium borate as a cell adjusting agent.

The zinc borate is a generic term for metal salts containing boron that bond to oxygen and zinc. Examples of the zinc borate include zinc metaborate $[Zn(BO_2)_2]$ and basic zinc borate $[ZnB_4O_7 \cdot 2ZnO]$. In addition, examples of the zinc borate include compounds represented by chemical formulas such as $2ZnO \cdot 3B_2O_3 \cdot 3.5H_2O$ and $3ZnO \cdot 2B_2O_3 \cdot 5H_2O$, but are not limited thereto.

The magnesium borate is a generic term for metal salts containing boron that bond to oxygen and magnesium. Examples of the magnesium borate include magnesium orthoborate $[Mg_3(BO_3)_2]$, magnesium diborate, magnesium pyroborate $[(Mg_2B_2O_5)$ or $(2MgO \cdot B_2O_3)]$, magnesium metaborate $[MgO \cdot B_2O_3]$, trimagnesium tetraborate $[(Mg_3B_4O_9)$ or $(3MgO \cdot 2B_2O_3)]$, pentamagnesium tetraborate $[Mg_5B_4O_{11}]$, and magnesium hexaborate $[MgB_6O_{10}]$. In addition, examples of the magnesium borate include compounds represented by chemical formulas such as $2MgO \cdot 3B_2O_3 \cdot nH_2O$ (where n is a positive integer), $MgO \cdot 4B_2O_3 \cdot 3H_2O$, and $MgO \cdot 6B_2O_3 \cdot 18H_2O$, but are not limited thereto.

Among these metal borates, zinc borate represented by a chemical formula such as $2ZnO \cdot 3B_2O_3 \cdot 3.5H_2O$ or $3ZnO \cdot 2B_2O_3 \cdot 5H_2O$ is particularly preferably contained.

It is preferable that the number-based arithmetic average particle size (hereinafter, also simply referred to as an average particle size) of the metal borate is 1 $\mu$m or more, and the number proportion of particles having a particle size of 5 $\mu$m or more in the metal borate is 20% or less. When the number-based arithmetic average particle size of the metal borate is within the above range and the particle size distribution is within the above range, the expanded beads are more excellent in uniformity of the cells, and an expanded beads molded article having a good appearance with less color unevenness can be obtained.

The average particle size of the metal borate is preferably 1 $\mu$m or more and 5 $\mu$m or less, more preferably 1.5 $\mu$m or more and 4 $\mu$m or less, and still more preferably 2 $\mu$m or more and 3 $\mu$m or less because aggregation of the metal borate can be prevented and uniformity of cells of expanded beads can be further enhanced.

In addition, the number-based proportion of the particles of the metal borate having a particle size of 5 $\mu$m or more is more preferably 15% or less, and still more preferably 12% or less, because variation in cells in the expanded beads can be further reduced.

Assuming the shape of each of the particles as a sphere, the volume-based particle size distribution measured by the laser diffraction scattering method is converted into the number-based particle size distribution, whereby the number-based particle size distribution can be obtained. Then, the number-based arithmetic average particle size can be obtained by arithmetically averaging the particle sizes based on the number-based particle size distribution. In addition, the number proportion of particles having a particle size of 5 $\mu$m or more can be determined from the number-based particle size distribution. Note that the particle size means the diameter of a virtual sphere having the same volume as that of the particle.

The content of the metal borate is preferably 0.001 mass% or more and 3 mass% or less with respect to 100 parts by mass of the polypropylene-based resin constituting the core layer. When the content of the metal borate in the resin particles is 0.001 mass% or more, the metal borate more effectively acts as the cell adjusting agent, and the expanded beads have a more uniform cell structure. When the content of the metal borate in the resin particles is 3 mass% or less, it is possible to avoid the cells of the expanded beads from becoming excessively fine. In order to further enhance these effects, the content of the metal borate in the resin particles is more preferably 0.01 mass% or more and 1 mass% or less, and still more preferably 0.03 mass% or more and 0.5 mass% or less with respect to 100 parts by mass of the polypropylene-based resin constituting the core layer.

The melting point Tmc of the polypropylene-based resin constituting the core layer is preferably 158°C or lower. According to the expanded beads obtained by expanding such resin particles, a molded article having a good surface property and excellent rigidity can be easily obtained at a lower molding temperature (i.e., a low molding pressure). From the viewpoint of improving this effect, the melting point Tmc of the polypropylene-based resin constituting the core layer is preferably 155°C or lower, and more preferably 150°C or lower. On the other hand, from the viewpoint of further improving the heat resistance, mechanical strength, and the like of the molded article, the melting point Tmc of the polypropylene-based resin constituting the core layer is preferably 135°C or higher, more preferably 138°C or higher, and still more preferably 140°C or higher.

A melting point of the polypropylene-based resin is determined in accordance with JIS K 7121:1987. Specifically, first, a test piece composed of a polypropylene-based resin is prepared and conditioned on the basis of "(2) Measurement of the melting temperature after performing a definite heat treatment" described in JIS K 7121:1987. The heating rate and the cooling rate in the conditioning are both set to 10°C/min. The conditioned test piece is heated from 30°C to 200°C at a heating rate of 10°C/min to acquire a DSC curve, and a peak temperature of the melting peak appearing in the DSC curve is defined as the melting point Tmc. Note that in a case where a plurality of melting peaks appear in the DSC curve, the peak temperature of the melting peak having the largest area is defined as the melting point Tmc.

A melt mass flow rate (that is, MFR) of the polypropylene-based resin constituting the core layer is preferably 5 g/10 min or more, more preferably 6 g/10 min or more, and still more preferably 7 g/10 min or more. In this case, expandability and moldability of the expanded beads can be further enhanced. On the other hand, from the viewpoint of further enhancing the rigidity of the molded article, the MFR is preferably 12 g/10 min or less, and more preferably 10 g/10 min or less. Note that the MFR of the polypropylene-based resin is a value measured under conditions of a test temperature of 230°C and a load of 2.16 kg on the basis of JIS K 7210-1:2014.

A flexural modulus of the polypropylene-based resin constituting the core layer is preferably 800 MPa or more and 1600 MPa or less. According to the expanded beads obtained by expanding such resin particles, the rigidity of the molded article can be further enhanced, and a molded article having a good surface property and high rigidity can be formed at a lower molding temperature.

From the viewpoint of further enhancing the rigidity of the molded article, the flexural modulus of the polypropylene-based resin constituting the core layer is preferably 850 MPa or more, more preferably 900 MPa or more, and still more preferably 950 MPa or more. On the other hand, from the viewpoint of avoiding an excessive increase in the molding pressure of the expanded beads, the flexural modulus of the polypropylene-based resin constituting the core layer is preferably 1600 MPa or less.

In addition, from the viewpoint that a molded article having an excellent surface property and rigidity can be molded at a still lower molding temperature (that is, a low molding pressure), the flexural modulus of the polypropylene-based resin constituting the core layer is preferably 1550 MPa or less, more preferably 1500 MPa or less, and still more preferably less than 1200 MPa. Note that the flexural modulus of the polypropylene-based resin can be determined on the basis of JIS K 7171:2008.

The core layer of the resin particle is covered with the covering layer. The covering layer may cover the entire surface of the core layer, or may cover a part of the surface of the core layer. From the viewpoint of more reliably obtaining the above-described operational effect, it is preferable that the covering layer covers 50% or more, more preferably 60% or more, and still more preferably 70% or more with respect to 100% of the surface area of the resin particle. For example, the resin particle may have a multilayer structure including a columnar core layer and a covering layer covering a side peripheral surface of the core layer.

A mass ratio of the core layer to the covering layer in the resin particle is preferably core layer : covering layer = 99.5 : 0.5 to 80 : 20, more preferably 99 : 1 to 85 : 15, and still more preferably 97 : 3 to 90 : 10. In other words, the mass proportion of the covering layer to the total mass of the core layer and the covering layer (that is, the total mass of the resin particle) is preferably 0.5% or more and 20% or less, more preferably 1% or more and 15% or less, and still more preferably 3% or more and 10% or less. In this case, expanded beads having high blackness, small variation in color tone, and an excellent filling property can be more easily obtained.

Examples of the polyolefin-based resin constituting the covering layer include polyethylene-based resins, polypropylene-based resins, and polybutene-based resins. From the viewpoint of adhesiveness to the core layer, the polyolefin-based resin constituting the covering layer is preferably a polyethylene-based resin or a polypropylene-based resin, and more preferably a polypropylene-based resin. Examples of the polypropylene-based resin include an ethylene-propylene copolymer, an ethylene-butene copolymer, an ethylene-propylene-butene copolymer, and a propylene homopolymer.

From the viewpoint that carbon black is not unevenly distributed and is easily dispersed well in the covering layer, the content of the polypropylene-based resin in the covering layer is preferably 95 mass% or more, more preferably 97 mass% or more, further preferably 99 mass% or more, particularly preferably more than 99.5 mass%, and 100 mass%, that is, the polyolefin-based resin constituting the covering layer is most preferably composed of only the polypropylene-based resin.

The covering layer may contain a polymer other than the polyolefin-based resin, as long as the above-described operational effect are not impaired. Examples of the other polymer include thermoplastic resins other than polyolefin-based resins, such as polystyrene-based resins, and elastomers. From the viewpoint that carbon black is not unevenly distributed and is easily dispersed well in the covering layer, the content of the other polymer in the covering layer is preferably 20 mass% or less, more preferably 10 mass% or less, further preferably 5 mass% or less, particularly preferably less than 0.5 mass%, and 0 mass%, that is, it is most preferable that the covering layer contains substantially only the polyolefin-based resin as a polymer.

As described above, 0.1 parts by mass or more and less than 5 parts by mass of carbon black is added to the polyolefin-based resin constituting the covering layer with respect to 100 parts by mass of the polyolefin-based resin. The polyolefin-based resin may contain an additive such as a crystal nucleating agent, a flame retardant, a flame retardant aid, a plasticizer, an antistatic agent, an antioxidant, an ultraviolet inhibitor, a light stabilizer, or an antibacterial agent as long as the above-described operational effect are not impaired. The content of the additive in the covering layer is preferably, for example, 0.01 parts by mass or more and 1 part by mass or less with respect to 100 parts by mass of the polyolefin-based resin.

The polyolefin-based resin particles constituting the covering layer contain silica particles and a higher fatty acid amide, and a total of a content of the silica particles and a content of the higher fatty acid amide in the covering layer is preferably 0.05 mass% or more and 3 mass% or less. In this case, it is possible to avoid accumulation of deposits derived from expanded beads in the mold during in-mold molding and to obtain an expanded beads molded article having a more excellent surface property. From the viewpoint of further enhancing this effect, the total of the content of the silica particles and the content of the higher fatty acid amide in the covering layer is more preferably 0.1 mass% or more and 2 mass% or less, and still more preferably 0.2 mass% or more and 1 mass% or less.

From the same viewpoint, a mass ratio of the silica particles and the higher fatty acid amide in the polyolefin-based resin particles constituting the covering layer is preferably 1 : 0.2 to 1 : 8, more preferably 1 : 0.8 to 1 : 6, and still more preferably 1 : 1 to 1 : 5.

The higher fatty acid amide means a fatty acid amide having a hydrocarbon group having 12 or more carbon atoms. Specific examples of the higher fatty acid amide include saturated fatty acid amides such as lauric acid amide, palmitic acid amide, stearic acid amide, and behenic acid amide; and unsaturated fatty acid amides such as oleic acid amide, erucic acid amide, and nervonic acid amide.

A melting point $T_{ms}$ of the polyolefin-based resin constituting the covering layer is preferably 120°C or higher and 145°C or lower, and more preferably 125°C or higher and 140°C or lower. By expanding such resin particles, expanded beads excellent in fusion bondability during molding can be easily obtained.

The melting point $T_{ms}$ of the polyolefin-based resin constituting the covering layer is preferably lower than the melting point $T_{mc}$ of the polypropylene-based resin constituting the core layer. According to the expanded beads obtained by expanding such resin particles, a molded article having a good surface property and excellent rigidity can be easily obtained at a lower molding temperature (i.e., a low molding pressure). From the viewpoint of improving the effect, a difference $T_{mc} - T_{ms}$ between the melting point $T_{mc}$ of the polypropylene-based resin and the melting point $T_{ms}$ of the polyolefin-based resin is preferably 5°C or more, more preferably 6°C or more, and still more preferably 8°C or more. On the other hand, from the viewpoint of preventing peeling between the expanded layer and the covering layer, adhesion between the expanded beads, and the like in the expanded beads, the difference $T_{mc} - T_{ms}$ between the melting point $T_{mc}$ of the polypropylene-based resin and the melting point $T_{ms}$ of the polyolefin-based resin is preferably 35°C or less, more preferably 20°C or less, and still more preferably 15°C or less.

Note that the method for measuring the melting point of the polyolefin-based resin constituting the covering layer is the same as the method for measuring the melting point of the polypropylene-based resin constituting the expanded layer described above except that a test piece made of a polyolefin-based resin is used instead of a test piece made of a polypropylene-based resin. However, in a case where a plurality of melting peaks appear in the DSC curve, the peak temperature of the melting peak on the lowest temperature side is defined as the melting point Tms.

An MFR of the polyolefin-based resin constituting the covering layer is preferably about the same as the MFR of the polypropylene-based resin constituting the core layer, and specifically, is preferably 2 g/10 min or more and 15 g/10 min or less, more preferably 3 g/10 min or more and 12 g/10 min or less, and still more preferably 4 g/10 min or more and 10 g/10 min or less. According to the expanded beads obtained by expanding such resin particles, peeling between the expanded layer and the covering layer can be reliably avoided. Note that in a case where the polyolefin-based resin is a polypropylene-based resin, the MFR thereof is a value obtained by measurement under conditions of a test temperature of 230°C and a load of 2.16 kg on the basis of JIS K7210-1:2014, and in a case where the polyolefin-based resin is a polyethylene-base resin, the MFR thereof is a value obtained by measurement under conditions of a test temperature of 190°C and a load of 2.16 kg on the basis of JIS K7210-1:2014.

For producing the resin particles, for example, a coextrusion apparatus including an extruder for forming a core layer, an extruder for forming a covering layer, and a coextrusion die connected to these two extruders can be used. The resin particles can be prepared by, for example, a strand cutting method. Specifically, in the extruder for forming a core layer, the polypropylene-based resin for forming a core layer, carbon black, an additive to be added as necessary, and the like are melt-kneaded to prepare a melt-kneaded product for forming a core layer. On the other hand, in the extruder for forming a covering layer, the polyolefin-based resin for forming a covering layer, carbon black, an additive to be added as necessary, and the like are melt-kneaded to prepare a melt-kneaded product for forming a covering layer. These melt-kneaded products are co-extruded and joined in the die to form a composite having a multilayer structure including a columnar core layer in a non-foamed state and a covering layer in a non-foamed state covering an outer surface of the core layer. After the composite is extruded through a small hole of the die, the extrudate is cooled through a water bath containing water. Thereafter, the extrudate is cut into a desired length to obtain resin particles. Note that the method for producing resin particles is not limited to the method described above, and a hot cutting method, an underwater cutting method, or the like may be employed.

<Dispersing step>

**In** the dispersing step, the resin particles are put into a dispersion medium and then stirred to be dispersed in the dispersion medium. The dispersing step may be performed in a sealed container to be used in a first expanding step to be performed later, or may be performed in a container different from the sealed container to be used in the first expanding step. From the viewpoint of simplification of the production process, it is preferable to perform the dispersing step in the sealed container to be used in the first expanding step.

As the dispersion medium, an aqueous dispersion medium containing water as a main component is used. **In** addition to water, the aqueous dispersion medium may contain a hydrophilic organic solvent such as ethylene glycol, glycerin, methanol, or ethanol. A proportion of water in the aqueous dispersion medium is preferably 60 mass% or more, more preferably 70 mass% or more, and still more preferably 80 mass% or more.

It is preferable to add a dispersant to the dispersion medium. By adding the dispersant to the dispersion medium, fusion between the resin particles heated in the container can be prevented in the first expanding step. An addition amount of the dispersant is preferably 0.001 parts by mass or more and 5 parts by mass or less per 100 parts by mass of the resin particles. As the dispersant, an organic dispersant or an inorganic dispersant can be used, but it is preferable to use a fine-grained inorganic substance as the dispersant from the viewpoint of ease of handling. More specifically, as the dispersant, for example, a clay mineral such as amsnite, kaolin, mica, or clay, aluminum oxide, titanium oxide, basic magnesium carbonate, basic zinc carbonate, calcium carbonate, iron oxide, or the like can be used. These dispersants may be used alone, or two or more kinds of dispersants may be used in combination. Among them, a clay mineral is preferably used as the dispersant. The clay mineral may be natural or synthetic.

Note that in a case where the dispersant is used, an anionic surfactant such as sodium dodecylbenzenesulfonate, sodium alkylbenzenesulfonate, sodium lauryl sulfate, or sodium oleate is preferably used in combination as a dispersion aid. An addition amount of the dispersion aid is preferably 0.001 parts by mass or more and 1 part by mass or less per 100 parts by mass of the resin particles.

<First expanding step>

In the first expanding step, first, the resin particles in the dispersion medium are impregnated with an inorganic physical blowing agent in a sealed container. As the inorganic physical blowing agent for expanding the resin particles, carbon dioxide, air, nitrogen, helium, argon, or the like can be used. From the viewpoint of environmental load and handleability, carbon dioxide is preferably used. An addition amount of the blowing agent is preferably 0.1 parts by mass or more and 30 parts by mass or less, and more preferably 0.5 parts by mass or more and 15 parts by mass or less, with respect to 100 parts by mass of the resin particles.

As a method for impregnating the resin particles with the inorganic physical blowing agent in the first expanding step, a method can be adopted in which the blowing agent is supplied into a sealed container, and a pressure in the sealed container is increased to impregnate resin particles in a dispersion medium with the blowing agent. At this time, when the resin particles are heated together with the dispersion medium, impregnation of the resin particles with the blowing agent can be further promoted.

The pressure in the sealed container during expanding is preferably 0.5 MPa (G) or more in gauge pressure. On the other hand, the pressure in the sealed container is preferably 4.0 MPa (G) or less in gauge pressure. Within the above range, expanded beads can be produced safely without the risk of breakage, explosion, or the like of the sealed container.

The temperature of the dispersion medium is raised at 1 to 5°C/min in the first expanding step, so that the temperature at the time of expanding can also be in an appropriate range.

After the impregnation of the resin particles with the blowing agent is completed, the contents of the sealed container are released to a lower pressure environment than the sealed container. As a result, the core layer of the resin particles is expanded to form a cell structure, and the cell structure is stabilized by being cooled by the outside air (i.e., atmosphere), thereby obtaining first-step expanded beads. From the viewpoint of easily avoiding adhesion between first-step expanded beads immediately after the first expanding, and from the viewpoint of easily preventing shrinkage of first-step expanded beads, a temperature Tu of the atmosphere into which the resin particles are released is preferably adjusted to a low temperature. Specifically, the temperature Tu of the atmosphere into which the resin particles are released is preferably lower than 80°C and more preferably 75°C or lower.

In the related art, in a case where the temperature Tu of the atmosphere into which the resin particles are released is low, the blackness of the resulting expanded beads tends to be low, and it is difficult to obtain a lightweight molded article having high blackness. On the other hand, according to the production method described above, the blackness of the finally obtained molded article can be increased even in a case where the temperature Tu of the atmosphere into which the resin particles are released is adjusted to a low temperature of, for example, less than 80°C. From the viewpoint of curtailing excessive reduction in blackness of the first-step expanded beads, the temperature Tu of the atmosphere into which the resin particles are released is preferably 40°C or higher, and more preferably 60°C or higher.

From the viewpoint of further increasing the blackness of the first-step expanded beads and the viewpoint of further avoiding the adhesion and shrinkage of the first-step expanded beads, a difference [Tmc - Tu] between the melting point Tmc of the polypropylene-based resin constituting the core layer of the resin particles and the temperature Tu of the atmosphere into which the resin particles are released is preferably 65°C or more and 85°C or less.

In a case where the resin particles are heated when impregnating the resin particles with the blowing agent, it is preferable to perform heating and expanding in the following manner. That is, first, a first holding step of holding at a temperature of (the melting point of the polypropylene-based resin - 20°C) or higher and lower than (the end temperature of melting of the polypropylene-based resin) for a sufficient time, preferably about 10 to 60 minutes is performed, and then the temperature is adjusted to a temperature from (the melting point of the polypropylene-based resin - 15°C) to lower than (the end temperature of melting of the polypropylene-based resin + 10°C). Then, if necessary, a second holding step of holding at that temperature for a further sufficient time, preferably about 10 to 60 minutes is performed. Thereafter, it is preferable that the contents of the sealed container are released to the outside in a state where the temperature in the sealed container is set to (the melting point of the polypropylene-based resin - 10°C) or higher to expand the resin particles. The temperature in the sealed container during expanding is more preferably (the melting point of the polypropylene-based resin) or higher and (the melting point of the polypropylene-based resin + 20°C) or lower. When the resin particles are heated to be expanded in this manner, expanded beads having excellent mechanical strength and excellent moldability can be easily obtained.

The reason why the mechanical strength and moldability of the expanded beads can be improved by heating and expanding under the conditions described above is considered to be formation of secondary crystals in the polypropylene-based resin constituting the core layer. Whether or not secondary crystals are formed in the polypropylene-based resin can be determined by presence or absence of a high-temperature peak in the DSC curve. Note that a method for determining the presence or absence of the high-temperature peak will be described below.

As described above, it is possible to obtain the first-step expanded beads each including an expanded layer formed by expanding the core layer and the covering layer in a non-foamed state, the expanded beads having the bulk ratio $M_1$ within the above-mentioned specific range. The resulting first-step expanded beads can be left to stand for 12 hours or longer under an atmosphere of, for example, 23°C and 50% to be dried. The bulk ratio $M_1$ of the first-step expanded beads can be adjusted by, for example, the type of the base resin of the core layer, the addition amount of the blowing agent in the first expanding step, the temperature at the time of expanding, the temperature of the atmosphere into which the contents are released from the sealed container, the pressure difference between the pressure in the sealed container and the pressure of the environment into which the contents are released from the sealed container, and the like.

The bulk ratio $M_1$ of the first-step expanded beads is a value obtained by dividing a density (unit: kg/m$^3$) of the polypropylene-based resin constituting the core layer of the resin particle by the bulk density (unit: kg/m$^3$) of the first-step expanded beads. The method for calculating the bulk density of the first-step expanded beads is as follows. First, the first-step expanded beads are allowed to stand for 24 hours or longer in an environment of a relative humidity of 50%, a temperature of 23°C, and a pressure of 1 atm to condition the first-step expanded beads. Next, the first-step expanded beads after the conditioning are filled in a measuring cylinder so as to be naturally deposited, and a bulk volume (unit: L) of the first-step expanded bead group is read from the scale of the measuring cylinder. Then, a value obtained by dividing a mass (unit: g) of the first-step expanded beads in the measuring cylinder by the above-described bulk volume is subjected to unit conversion, so that the bulk density (unit: $kg/m^3$) of the first-step expanded beads can be obtained.

<Second expanding step>

In the second expanding step, first, an internal pressure is applied to the first-step expanded beads. More specifically, the first-step expanded beads are placed in a pressure-resistant container, and then the inside of the pressure-resistant container is pressurized with an inorganic gas such as air or carbon dioxide to impregnate the first-step expanded beads with the inorganic gas. As a result, the pressure in cells of the first-step expanded beads is made equal to or higher than the atmospheric pressure. Thereafter, the first-step expanded beads taken out from the pressure-resistant container are heated using a heating medium such as steam or heated air under an environment of a pressure lower than the pressure in the cells, so that the first-step expanded beads can be further expanded. As a result, expanded beads (second-step expanded beads) having a bulk ratio of $M_2$, a bulk ratio $M_2$ being 1.2 times or more and 3.0 times or less the bulk ratio $M_1$, can be obtained.

The bulk ratio $M_2$ of the expanded beads can be adjusted by, for example, the type of the base resin of the expanded layer of the first-step expanded bead, the pressure difference between the pressure in the cells in the first-step expanded beads to which the internal pressure is applied and the pressure of the environment in which heating is performed, the heating temperature, the heating time, and the like. A method for measuring the bulk ratio $M_2$ of the expanded beads will be described below.

According to the production method of the present invention, by having the predetermined second expanding step, it is possible to obtain expanded beads having an excellent filling property and being capable of in-mold molding an expanded beads molded article having high blackness and less noticeable color unevenness while achieving improvement in productivity in the first expanding step.

In the second expanding step, the internal pressure applied to the first-step expanded beads is preferably atmospheric pressure or more from the viewpoint of easily obtaining expanded beads having the desired bulk ratio $M_2$, and is preferably 0.1 MPa (G) or more, more preferably 0.2 MPa (G) or more, and still more preferably 0.3 MPa (G) or more, in gauge pressure. On the other hand, the upper limit of the internal pressure applied to the first-step expanded beads is about 1 MPa (G), and preferably 0.8 MPa (G) or less.

A heating time of the first-step expanded beads in the second expanding step is preferably in a range of 3 seconds or longer and 60 seconds or shorter from the viewpoint of easily obtaining expanded beads having the desired bulk ratio $M_2$ while avoiding blocking between the first-step expanded beads. From the same viewpoint, the temperature of the heating medium is preferably in a range of 80°C or higher and 120°C or lower.

(Polypropylene-based resin expanded bead)

The polypropylene-based resin expanded bead thus obtained has an expanded layer having a polypropylene-based resin as a base material, and a covering layer, which covers the expanded layer, having a polyolefin-based resin as a base resin. The expanded layer contains 0.1 parts by mass or more and less than 5 parts by mass of carbon black with respect to 100 parts by mass of the polypropylene-based resin, and the covering layer contains 0.1 parts by mass or more and less than 5 parts by mass of carbon black with respect to 100 parts by mass of the polyolefin-based resin. It is preferable that the expanded beads have no through-hole from the viewpoint of further enhancing the appearance and rigidity of the obtained molded article.

The polypropylene-based resin constituting the expanded layer of the expanded bead is the same as the polypropylene-based resin constituting the core layer of the resin particle, and thus the above description regarding the polypropylene-based resin can be appropriately referred to. Similarly, the polyolefin-based resin constituting the covering layer of the expanded bead is the same as the polyolefin-based resin constituting the covering layer of the resin particle, and thus the above description regarding the polyolefin-based resin can be appropriately referred to.

A closed cell content of the expanded beads is preferably 88% or more, more preferably 90% or more, and still more preferably 95% or more. In this case, high in-mold moldability can be more stably obtained. According to such expanded beads, an expanded beads molded article having a good surface property and excellent rigidity can be easily obtained.

The closed cell content of the expanded beads can be measured using an air-comparison pycnometer on the basis of ASTM-D 2856-70 Procedure C. Specifically, measurement is performed as follows. First, the expanded beads are allowed to stand for 24 hours or longer in an environment of a relative humidity of 50%, a temperature of 23°C, and an atmospheric pressure of 1 atm to condition the expanded beads. After a measurement sample is collected in such a manner that a bulk volume, that is, a value of a marked line when the expanded beads after the conditioning are naturally deposited in a measuring cylinder, is about 20 cm$^3$, an apparent volume of the measurement sample is measured. Note that specifically, the apparent volume of the measurement sample is a volume corresponding to an increased amount in the liquid level when the measurement sample is immersed in a measuring cylinder containing ethanol at a temperature of 23°C.

After the measurement sample whose apparent volume has been measured is sufficiently dried, a true volume value of the measurement sample measured by AccuPyc II 1340 manufactured by Shimadzu Corporation is measured in accordance with Procedure C described in ASTM-D 2856-70. Then, using these volume values, the closed cell content of the measurement sample is calculated on the basis of the following equation (1). The above operation is performed five times using different measurement samples, and the arithmetic average value of the closed cell contents obtained by these five measurements is defined as the closed cell content of the expanded beads.

$$\text{Closed cell content (\%)} = (Vx - W/\rho) \times 100/(Va - W/\rho) \cdots (1)$$

Vx (unit: cm$^3$) in the above equation (1) is a true volume (that is, a sum of a volume of the resin constituting the expanded bead and a total cell volume of closed cell portions in the expanded bead) of the expanded bead, Va (unit: cm$^3$) is an apparent volume (that is, a volume measured from an increase in the liquid level when the expanded bead is immersed in a measuring cylinder containing ethanol) of the expanded bead, W (unit: g) is a mass of the measurement sample, and $\rho$ (unit: g/cm$^3$) is a density of the polypropylene-based resin constituting the expanded layer.

The expanded bead preferably has a crystal structure in which an endothermic peak due to melting inherent to the polypropylene-based resin constituting the expanded layer and one or more melting peaks located on a higher temperature side than the endothermic peak appear in a first DSC curve obtained when heated from 23°C to 200°C at a heating rate of 10°C/min. The expanded bead having such a crystal structure has excellent mechanical strength and excellent moldability. Note that hereinafter, the endothermic peak due to melting inherent to the polypropylene-based resin appearing in the DSC curve is referred to as a "resin intrinsic peak", and a melting peak appearing on a higher temperature side than the resin intrinsic peak is also referred to as a "high-temperature peak". The resin intrinsic peak is generated by endotherm when the crystal originally possessed by the polypropylene-based resin constituting the expanded layer melts. On the other hand, it is presumed that the high-temperature peak is generated by melting of secondary crystals formed in the polypropylene-based resin constituting the expanded layer in the process of producing the expanded beads. That is, in a case where a high-temperature peak appears in the DSC curve, it is estimated that secondary crystals are formed in the polypropylene-based resin.

Whether or not the expanded bead has the above-described crystal structure only needs to be determined on the basis of a DSC curve obtained by performing differential scanning calorimetry (DSC) under the above-described conditions in accordance with JIS K 7121:1987. In performing DSC, 1 to 3 mg of the expanded bead(s) are only required to be used as a sample.

Note that as described above, in the DSC curve obtained when heating from 23°C to 200°C (that is, first heating) is performed at a heating rate of 10°C/min, then cooling from 200°C to 23°C is performed at a cooling rate of 10°C/min, and then heating from 23°C to 200°C (that is, second heating) is performed again at a heating rate of 10°C/min, only an endothermic peak due to melting inherent in the polypropylene-based resin constituting the expanded layer is observed, and thus the resin intrinsic peak and the high-temperature peak can be distinguished. The peak temperature of the resin intrinsic peak may be slightly different between the first heating and the second heating, but the difference is usually within 5°C.

A heat of fusion of the high-temperature peak of the expanded beads is preferably 5 J/g or more and 40 J/g or less, more preferably 7 J/g or more and 30 J/g or less, and still more preferably 10 J/g or more and 20 J/g or less from the viewpoint of further improving the moldability of the expanded beads and obtaining a molded article having more excellent rigidity.

The heat of fusion of the high-temperature peak described above is a value obtained as follows. First, using 1 to 3 mg of the conditioned expanded bead(s) as a sample, differential scanning calorimetry is performed under the condition described above to obtain a DSC curve. FIG. 1 shows an example of the DSC curve. In a case where the expanded beads have a high-temperature peak, as shown in FIG. 1, a resin intrinsic peak $\Delta H1$ and a high-temperature peak $\Delta H2$ having an apex on a higher temperature side than an apex of the resin intrinsic peak $\Delta H1$ appear in the DSC curve.

Next, a straight line L1 connecting a point $\alpha$ corresponding to 80°C on the DSC curve and a point $\beta$ corresponding to an end temperature of melting T of the expanded bead is drawn. Note that the end temperature of melting T is an end point on the high temperature side in the high-temperature peak $\Delta H2$, that is, an intersection of the high-temperature peak $\Delta H2$ and a baseline on the higher temperature side than the high-temperature peak $\Delta H2$ in the DSC curve.

After the straight line L1 is drawn, a straight line L2 that passes through a maximum point $\gamma$ existing between the

resin intrinsic peak ΔH1 and the high-temperature peak ΔH2 and is parallel to the vertical axis of the graph is drawn. The straight line L2 divides the resin intrinsic peak ΔH1 and the high-temperature peak ΔH2. The heat of fusion of the high-temperature peak ΔH2 can be calculated on the basis of an area of a portion surrounded by a portion constituting the high-temperature peak ΔH2 in the DSC curve, the straight line L1, and the straight line L2.

The bulk ratio $M_2$ of the expanded beads is preferably 10 times or more and 75 times or less, more preferably 20 times or more and 75 times or less, still more preferably 30 times or more and 75 times or less, and particularly preferably 35 times or more and 60 times or less. By using such expanded beads, a lightweight expanded beads molded article having high blackness, less noticeable color unevenness, and a good surface property can be easily obtained. **In** the related art, in the case of expanded beads having a high bulk ratio, reduction in blackness and deterioration in filling property are more likely to occur. According to the production method of the present disclosure, for example, even in a case of expanded beads having a bulk ratio of 30 times or more, it is possible to curtail a decrease in blackness and deterioration in filling property.

The bulk ratio $M_2$ of the expanded beads is a value obtained by dividing a density (unit: $kg/m^3$) of the polypropylene-based resin constituting the core layer of the resin particle by the bulk density (unit: $kg/m^3$) of the expanded beads. The method for measuring the bulk density of the expanded bead is as follows. First, the expanded beads are allowed to stand for 24 hours or longer in an environment of a temperature of 23°C, a relative humidity of 50%, and 1 atm to condition the expanded beads. The expanded beads after the conditioning are filled in a measuring cylinder so as to be naturally deposited, and a bulk volume (unit: L) of the expanded beads is read from the scale of the measuring cylinder. Then, a value obtained by dividing a mass (unit: g) of the expanded beads in the measuring cylinder by the above-described bulk volume is subjected to unit conversion, so that the bulk density (unit: $kg/m^3$) of the expanded beads can be obtained.

(Expanded beads molded article)

An expanded beads molded article can be obtained by in-mold molding of the expanded beads. A density of the molded article is preferably 10 $kg/m^3$ or more and 100 $kg/m^3$ or less. **In** this case, the lightweight property and the rigidity of the molded article can be improved in a well-balanced manner. From the viewpoint of further improving the rigidity of the molded article, the density of the molded article is more preferably 20 $kg/m^3$ or more, and still more preferably 25 $kg/m^3$ or more. From the viewpoint of further improving the lightweight property, the density of the molded article is more preferably 80 $kg/m^3$ or less, still more preferably 50 $kg/m^3$ or less, and particularly preferably 35 $kg/m^3$ or less. The density of the molded article is calculated by dividing the mass (unit: g) of the molded article by the volume (unit: L) obtained from the outer dimension of the molded article and performing unit conversion. **In** a case where it is not easy to determine the volume from the outer dimension of the molded article, the volume of the molded article can be determined by a submersion method.

A method for producing the expanded beads molded article is, for example, as follows. First, expanded beads to be used for preparing a molded article are prepared. **In** the preparation of the molded article, the expanded beads obtained by the production method described above may be used as they are. Alternatively, it is also possible to perform in-mold molding using expanded beads to which an internal pressure is applied by impregnating the expanded beads with an inorganic gas such as air in a pressure-resistant container to increase the pressure in the cells of the expanded beads.

Subsequently, expanded beads are filled in a mold having a cavity corresponding to a desired shape of a molded article. After the filling of the expanded beads is completed, a heating medium is supplied into the mold to heat the expanded beads. As the heating medium, for example, steam or the like can be used. The expanded beads in the mold are heated by the heating medium and fusion-bonded each other while being secondarily expanded. This can integrate the expanded beads in the mold to form a molded article.

After the heating of the expanded beads is completed, the molded article in the mold is cooled to stabilize its shape. Thereafter, the molded article is taken out from the mold, whereby the in-mold molding is completed. After the in-mold molding is completed, the molded article may be left to stand in an atmosphere of about 60 to 80°C for 12 hours or longer as necessary for aging. By aging the molded article taken out from the mold, shrinkage and deformation of the molded article can be avoided.

The expanded beads are excellent in filling property and capable of molding a good expanded beads molded article which has high blackness and less noticeable color unevenness. In particular, even in a case of expanded beads having a high bulk ratio, it is possible to curtail a decrease in blackness and deterioration in filling property.

The expanded beads molded article obtained by in-mold molding of the polypropylene-based resin expanded beads contains, for example, 0.1 parts by mass or more and less than 5 parts by mass of carbon black with respect to 100 parts by mass of the resin constituting the expanded beads molded article, the expanded beads molded article has a molded article density of 10 $kg/m^3$ or more and 35 $kg/m^3$ or less, and the expanded beads molded article has an L* value of less than 24. Further, when a 100 mm × 100 mm square is drawn at a central portion of the surface of the expanded beads molded article, and a diagonal line is drawn from one corner of the square, the number of voids (gaps) present on the line each having a size of 1 mm × 1 mm or more is 3 or less. The L* value of the expanded beads molded article is preferably 23 or less, and more preferably 21 or less.

The L* value of the expanded beads molded article can be determined by the following method. Five measurement positions are randomly selected from the surface of the molded article, and the L* value is measured using a spectrophotometer (for example, "SE2000" manufactured by Nippon Denshoku Industries Co., Ltd.). Then, the arithmetic average value of the L* values obtained at these five measurement positions is defined as the L* value of the molded article. Note that the measurement range is 30 mmΦ, and the measurement method is a reflection method.

Examples

Examples of the method for producing polypropylene-based resin expanded beads will be described below. Polypropylene-based resins and polyolefin-based resins used in the present examples are shown in Table 1. Note that the ethylene-propylene copolymer and the ethylene-propylene-butene copolymer used in the present examples are both random copolymers. The density of each of the polypropylene-based resins (PP1, PP2, and PP3) shown in Table 1 is 900kg/m$^3$.

[Table 1]

(Table 1)

| Symbol | Material | Catalyst | Comonomer | Flexural Modulus (MPa) | Melting Point (°C) | MFR (g/10min) |
|---|---|---|---|---|---|---|
| PP1 | Ethylene-propylene random copolymer | Ziegler-Natta | Ethylene 3.1% | 980 | 142 | 8 |
| PP2 | Ethylene-propylene-butene random copolymer | Ziegler-Natta | Ethylene 0.5% Butene 9.0% | 930 | 139 | 8 |
| PP3 | Ethylene-propylene-butene random copolymer | Ziegler-Natta | Ethylene 4.5% Butene 3.0% | 980 | 138 | 7 |
| PO1 | Ethylene-propylene-butene random copolymer | Ziegler-Natta | Ethylene 3.1% Butene 3.8% | 650 | 133 | 6 |
| PO2 | Metallocene polyethylene | Metallocene | Not Measured | Not Measured | 100 | 10 |

The method for measuring the physical property values of the resins shown in Table 1 is as follows.

·Comonomer component content of polypropylene-based resin

A monomer component content of the polypropylene-based resin (specifically, the ethylene-propylene copolymer and the ethylene-propylene-butene copolymer) was determined by a known method making determination by IR spectrum. Specifically, the monomer component content was determined by the method described in Polymer Analysis Handbook (Polymer Analysis Research Council, Japan Society for Analytical Chemistry, edition, publication month and year: January 1995, publishing company: Kinokuniya, page number and item name: 615-616 "II.2.3 2.3.4 Propylene/ethylene copolymer", 618-619 "II.2.3 2.3.5 Propylene/butene copolymer"), that is, the method of performing quantification from a relationship of a value obtained by correcting absorbance of ethylene and butene with a predetermined coefficient, a thickness of a film-shaped test piece, and the like. More specifically, first, the polypropylene-based resin was hot-pressed in an environment at 180°C to be formed into a film shape, thereby preparing a plurality of test pieces having different thicknesses. Next, absorbances at 722 cm$^{-1}$ and 733 cm$^{-1}$ derived from ethylene ($A_{722}$, $A_{733}$) and an absorbance

at 766 cm$^{-1}$ derived from butene (A$_{766}$) were read by measuring an IR spectrum of each test piece. Next, for each test piece, the ethylene component content in the polypropylene-based resin was calculated using the following equations (2) to (4). A value obtained by arithmetically averaging the ethylene component contents obtained for the test pieces was defined as the ethylene component content (unit: mass%) in the polypropylene-based resin.

$$(K'_{733})_c = 1/0.96\{(K'_{733})_a - 0.268(K'_{722})_a\} \cdots (2)$$

$$(K'_{722})_c = 1/0.96\{(K'_{722})_a - 0.268(K'_{722})_a\} \cdots (3)$$

$$\text{Ethylene component content} = 0.575\{(K'_{722})_c + (K'_{733})_c\} \cdots (4)$$

In the equations (2) to (4), K'$_a$ is an apparent absorption coefficient (K'$_a$ = A/$\rho$t) at each wave number, K'$_c$ is a corrected absorption coefficient, A is absorbance, $\rho$ is a density (unit: g/cm$^3$) of the resin, and t is a thickness (unit: cm) of the film-shaped test piece. Note that the above equations (2) to (4) can be applied to random copolymers.

Furthermore, for each test piece, a butene component content in the polypropylene-based resin was calculated using the following equation (5). A value obtained by arithmetically averaging the butene component contents obtained for the test pieces was defined as the butene component content (unit: mass%) in the polypropylene-based resin.

$$\text{Butene component content} = 12.3(A_{766}/L) \cdots (5)$$

In the equation (5), A is absorbance, and L is a thickness (unit: mm) of the film-shaped test piece.

·Flexural modulus

Each of the resins shown in Table 1 was hot-pressed at 230°C to prepare a 4 mm sheet, and a test piece having a length of 80 mm × a width of 10 mm × a thickness of 4 mm was cut out from the sheet. The flexural modulus of this test piece was determined in accordance with JIS K 7171:2008. Note that a radius R1 of an indenter and a radius R2 of a support base are both 5 mm, an inter-fulcrum distance is 64 mm, and a test speed is 2 mm/min.

·Melting point

The melting points of the resins shown in Table 1 were determined in accordance with JIS K 7121:1987. Specifically, first, a test piece composed of each resin was conditioned on the basis of "(2) Measurement of the melting temperature after performing a definite heat treatment" described in JIS K 7121:1987. The test piece after the conditioning was heated from 30°C to 200°C at a heating rate of 10°C/min to obtain a DSC curve. Then, a peak temperature of a melting peak appearing in the DSC curve was defined as the melting point. Note that as a measuring apparatus, a heat flux differential scanning calorimeter (manufactured by SII NanoTechnology Inc., model number: DSC 7020) was used.

·Melt flow rate

The melt flow rates (that is, MFR) of the resins shown in Table 1 were measured under conditions of a temperature of 230°C and a load of 2.16 kg in accordance with JIS K 7210-1:2014.

Next, methods for producing expanded beads in Examples 1 to 7, Comparative Examples 1 to 5, and Reference Examples 1 to 2 will be described.

(Example 1)

In preparing expanded beads of Example 1, first, a coextrusion apparatus including an extruder for forming a core layer, an extruder for forming a covering layer, and a coextrusion die connected to these two extruders was used, and an extrudate extruded from the coextrusion apparatus was cut by a strand cutting method to prepare multilayer resin particles. Specifically, PP1 shown in Table 1, carbon black in a ratio shown in Table 2 with respect to PP1, and a cell adjusting agent were supplied to the extruder for forming a core layer, and melt-kneaded in the extruder to obtain a melt-kneaded product for forming a core layer. Note that furnace black (DBP oil absorption amount: 100 mL/mg, BET specific surface area: 80 m$^2$/g, average particle size: 20 nm) was used as the carbon black, zinc borate was used as the cell adjusting agent, and an addition amount of zinc borate was 500 ppm by mass with respect to the polypropylene-based resin.

As the zinc borate, "Firebrake ZB Fine" manufactured by Borex was used. Note that the number-based arithmetic average particle size of the zinc borate was 2.8 $\mu$m, and the number proportion of particles having a particle size of 5 $\mu$m or more was 10%. For the measurement of the particle size distribution of zinc borate, MT3000 manufactured by Microtrac was used, and the number-based particle size distribution of zinc borate was measured on the basis of the method described above. 1 g of zinc borate and 1 g of a 1% aqueous solution of sodium dodecylbenzenesulfonate were added to 100 g of water, and the mixture was subjected to dispersion treatment for 5 minutes using an ultrasonic shaker, and then used as a measurement sample. The sample had a refractive index of 1.81 and a non-spherical shape.

In addition, PO1 shown in Table 1, carbon black in a ratio shown in Table 2 with respect to PO1, silica particles, and a higher fatty acid amide were melt-kneaded in the extruder for forming a covering layer to obtain a melt-kneaded product for forming a covering layer. Note that as the carbon black, the same one as the furnace black blended in the core layer was used. An addition amount of the silica particles in the polyolefin-based resin was 0.1 mass%, and an addition amount of the higher fatty acid amide was 0.1 wt%. As the higher fatty acid amide, erucic acid amide ("FATTY AMIDE E" manufactured by Kao Corporation) was used.

These melt-kneaded products were coextruded and joined in the die to form a composite including a columnar core layer in a non-foamed state and a covering layer in a non-foamed state covering a side peripheral surface of the core layer. After this composite was extruded from the die, the extrudate was cooled in water while being taken up, and cut to an appropriate length using a pelletizer to obtain multilayer resin particles each including a core layer and a covering layer covering the side peripheral surface of the core layer. Note that the multilayer resin particles have no through-hole. A mass ratio between the core layer and the covering layer in the multilayer resin particle was set to core layer : covering layer = 95 : 5 (that is, the mass ratio of the covering layer was 5%). The mass per one multilayer resin particle was about 1.0 mg.

<Dispersing step>

100 kg of multilayer resin particles thus obtained was put into a sealed container having an inner capacity of 400 L together with 220 L of water as a dispersion medium. Next, 0.3 parts by mass of a dispersant, and 0.004 parts by mass of sodium alkylbenzenesulfonate and 0.01 parts by mass of aluminum sulfate as dispersion aids were added with respect to 100 parts by mass of the multilayer resin particles in the sealed container to disperse the multilayer resin particles in the dispersion medium. Kaolin was used as the dispersant.

<First expanding step>

Thereafter, carbon dioxide as an inorganic physical blowing agent was supplied into the sealed container while stirring the inside of the sealed container, and a temperature in the container was raised to the expanding temperature shown in Table 2. The pressure inside the container (that is, an impregnation pressure, a carbon dioxide pressure) at this time is shown in "Blowing agent pressure" column in Table 2. After the temperature in the container reached the expanding temperature shown in Table 2, this temperature was maintained for 15 minutes to impregnate the multilayer resin particles with the blowing agent. After the impregnation with the blowing agent was completed, the sealed container was opened, and the contents were released under an atmosphere of atmospheric pressure at a temperature of 75°C to expand the core layer of the multilayer resin particles. There was no fusion of the first-step expanded beads, and no shrinkage was observed. The first-step expanded beads were dried in an atmosphere of a temperature of 23 °C and a relative humidity of 50% for 24 hours. As described above, the first-step expanded beads each including an expanded layer formed by expanding the core layer and the covering layer in a non-foamed state covering the core layer were obtained. Note that the temperature Tu of the atmosphere into which the resin particles were released was adjusted by introducing air for cooling into the space immediately below the sealed container.

<Second expanding step>

Next, the first-step expanded beads were placed in a pressurized tank as a pressure-resistant container, and the pressurized tank was sealed. In this state, the inside of the pressurized tank was pressurized with air as an inorganic gas, and the air was impregnated into the cells so that the pressure in cells of the first-step expanded beads was a value shown in "Internal pressure" column of Table 2. After the application of the internal pressure to the first-step expanded beads was completed, the first-step expanded beads were taken out from the pressurized tank and placed in a metal drum. Thereafter, steam having a pressure shown in "Drum pressure" column of Table 2 was supplied to the first-step expanded beads to heat the first-step expanded beads under atmospheric pressure. As described above, the first-step expanded beads were further expanded to obtain expanded beads (second-step expanded beads). Various properties of the expanded beads thus obtained were as shown in Table 2.

(Example 2 and Example 3)

The methods for producing expanded beads of Example 2 and Example 3 are the same as the method for producing expanded beads of Example 1 except that the pressure in the sealed container in the first expanding step (that is, pressure of the blowing agent) and the pressure of steam in the second expanding step (that is, drum pressure) were changed to the values shown in Table 2.

(Example 4)

The method for producing expanded beads of Example 4 is the same as the method for producing expanded beads of Example 1 except that PO1 was changed to PO2 as the resin constituting the covering layer.

(Example 5)

The method for producing expanded beads of Example 5 is the same as the method for producing expanded beads of Example 1 except that the resin constituting the core layer (that is, the expanded layer of expanded beads) of resin particles was changed from PP1 to PP2.

(Example 6)

The method for producing expanded beads of Example 6 is the same as the method for producing expanded beads of Example 5 except that the pressure in the sealed container (that is, pressure of the blowing agent) and the expanding temperature in the first expanding step, and the pressure of steam in the second expanding step (that is, drum pressure) were changed to the values shown in Table 2.

(Example 7)

The method for producing expanded beads of Example 7 is the same as the method for producing expanded beads of Example 1 except that the resin constituting the core layer (that is, the expanded layer of expanded beads) of resin particles was changed from PP1 to PP3, the pressure in the sealed container (that is, pressure of blowing agent) and the expanding temperature in the first expanding step, and the pressure of steam in the second expanding step (that is, drum pressure) were changed to the values shown in Table 2.

(Comparative Example 1)

In the method for producing expanded beads of Comparative Example 1, first, multilayer resin particles were prepared in the same manner as in Example 1. Then, the resin particles were expanded to a bulk ratio of 35 times only in the first expanding step to prepare expanded beads. In the method for producing expanded beads of Comparative Example 1, the second expanding step was not performed. The expanding temperature and the blowing agent pressure in the first expanding step in Comparative Example 1 were as shown in Table 3.

(Comparative Example 2)

The method for producing expanded beads of Comparative Example 2 was the same as the method for producing expanded beads of Comparative Example 1 except that amounts of carbon black blended in the core layer and the covering layer were changed to the values shown in Table 3.

(Comparative Example 3 and Comparative Example 4)

In the methods for producing expanded beads of Comparative Example 3 and Comparative Example 4, first, monolayer resin particles composed only of the core layer were prepared. Specifically, PP1 shown in Table 1, carbon black in a ratio shown in Table 3 with respect to PP1, and a cell adjusting agent were supplied to an extruder, and melt-kneaded in the extruder to obtain a melt-kneaded product. Then, the melt-kneaded product was extruded from the extruder to form an extrudate consisting of a columnar core layer in a non-foamed state. The extrudate was cooled in water while being taken up, and cut to an appropriate length using a pelletizer to obtain resin particles each including only a core layer. Thereafter, the first expanding step and the second expanding step were performed under the conditions shown in Table 3 to expand the resin particles, thereby obtaining expanded beads.

(Comparative Example 5)

The method for producing expanded beads of Comparative Example 5 was the same as the method for producing expanded beads of Example 3 except that no carbon black is blended in the covering layer.

(Reference Example 1)

In the method for producing expanded beads of Reference Example 1, first, resin particles were prepared by the same method as in Example 1 except that no carbon black was blended in the core layer and the covering layer. Thereafter, the first expanding step and the second expanding step were performed under the conditions shown in Table 3 to expand the resin particles, thereby obtaining expanded beads.

(Reference Example 2)

In the method for producing expanded beads of Reference Example 2, first, resin particles were prepared by the same method as in Comparative Example 3 and Comparative Example 4 except that no carbon black was blended in the core layer. Thereafter, the first expanding step and the second expanding step were performed under the conditions shown in Table 3 to expand the resin particles, thereby obtaining expanded beads.

Next, a method for evaluating various properties of the expanded beads obtained as described above will be described.

·Bulk ratio $M_1$ of first-step expanded beads

The first-step expanded beads were allowed to stand for 24 hours or longer in an environment of a relative humidity of 50%, a temperature of 23°C, and an atmospheric pressure of 1 atm to condition the first-step expanded beads. The first-step expanded beads after the conditioning were filled in a measuring cylinder so as to be naturally deposited, and a bulk volume (unit: L) of the first-step expanded beads was read from the scale of the measuring cylinder. Then, a value obtained by dividing a mass (unit: g) of the first-step expanded beads in the measuring cylinder by the above-described bulk volume was subjected to unit conversion, thereby calculating the bulk density (unit: $kg/m^3$) of the first-step expanded beads. Then, the bulk ratio $M_1$ of the first-step expanded beads was calculated by dividing the density of the polypropylene-based resin constituting the expanded layer by the bulk density of the first-step expanded beads. Tables 2 and 3 show the bulk ratios $M_1$ of the first-step expanded beads of Examples, Comparative Examples, and Reference Examples.

·Bulk ratio $M_2$ of expanded beads

Using expanded beads in place of the first-step expanded beads, the bulk density (unit: $kg/m^3$) of the expanded beads was measured in the same manner as in the method for measuring the bulk density of the first-step expanded beads described above. Then, the bulk ratio $M_2$ of the expanded beads was calculated by dividing the density of the polypropylene-based resin constituting the expanded layer by the bulk density of the expanded beads. Tables 2 and 3 show the bulk ratios $M_2$ and the bulk densities of the expanded beads of Examples, Comparative Examples, and Reference Examples.

·Closed cell content

The closed cell content of the expanded beads was measured using an air-comparison pycnometer on the basis of ASTM-D 2856-70 Procedure C. Specifically, the closed cell content was determined as follows. Using expanded beads having a bulk volume of about $20\,cm^3$ after conditioning as a measurement sample, an apparent volume Va was accurately measured by an ethanol immersion method as described below. After the measurement sample whose apparent volume Va has been measured was sufficiently dried, a true volume value Vx of the measurement sample measured by AccuPyc II 1340 manufactured by Shimadzu Corporation was measured in accordance with Procedure C described in ASTM-D 2856-70. Then, using these volume values Va and Vx, the closed cell content of the measurement sample was calculated on the basis of the following equation (6). The above operation was performed five times changing measurement samples, and the arithmetic average value (N = 5) of the closed cell contents in the five measurement samples was defined as the closed cell content of the expanded beads.

$$\text{Closed cell content (\%)} = (Vx - W/\rho) \times 100/(Va - W/\rho) \cdots (6)$$

The meanings of the symbols in the above equation (6) are as follows.

Vx: True volume of the expanded beads measured by the above method, that is, sum of the volume of the resin constituting the expanded beads and total cell volume of closed cell portions in expanded beads (unit: $cm^3$)

Va: Apparent volume measured from a water level rise when expanded beads are immersed in a measuring cylinder containing ethanol (unit: $cm^3$)

W: Mass of measurement sample of expanded beads (unit: g)

$\rho$: Density of resin constituting expanded beads (unit: $g/cm^3$)

Tables 2 and 3 show the closed cell contents of the expanded beads of Examples, Comparative Examples, and Reference Examples.

·High temperature peak calorific value

Using 1 to 3 mg of the conditioned expanded bead(s), differential scanning calorimetry was performed in accordance with JIS K7121:1987 to obtain a DSC curve. Note that the measurement starting temperature in DSC was 23°C, the measurement ending temperature was 200°C, and the heating rate was 10°C/min. As a measuring apparatus, "DSC Q1000" manufactured by TA Instruments was used. The area of the high temperature peak in the DSC curve obtained by the above-described method was calculated, and this value was shown as the high temperature peak calorific value in Tables 2 and 3.

·Filling property

The filling property of expanded beads was evaluated on the basis of an angle of repose and a filling property when the expanded beads were filled in a mold for evaluation. The method for measuring the angle of repose is as follows. For the measurement of the angle of repose of the expanded beads, the angle of repose was measured by a rotating cylinder method using a repose angle measuring apparatus "Flow surface angle measuring instrument FSA-100S" manufactured by Tsutsui Rigaku Kiki. Specifically, first, 200 mL of expanded beads in a bulk volume were placed in a cylindrical container having a capacity of 500 mL. Next, the rotation speed was set to 26 seconds per turn, and the container was rotated for 3 minutes to adjust the deposition state of the expanded beads. After the conditioning of the expanded beads was completed, the rotation of the container was further continued. Then, the rotation of the container was stopped immediately before the upper part of the deposit of the expanded beads in the container collapsed. An angle meter was set in accordance with an upper end and a lower end of a slope in the deposit of expanded beads formed by this operation, and an angle of the slope was measured. The angle of the slope thus obtained was defined as the angle of repose of the expanded beads.

In "Angle of repose" columns of "Filling property" columns of Tables 2 and 3, a symbol "A" in a case where the angle of repose is less than 27°, a symbol "B" in a case where the angle of repose is 27° or more and less than 30°, a symbol "C" in a case where the angle of repose is 30° or more and less than 33°, and a symbol "D" in a case where the angle of repose is 33° or more were described. The angle of repose is a value relating to ease of flowing of the expanded beads, and means that the smaller the angle of repose is, the easier the expanded beads flow, and the higher the filling property is.

The method for evaluating the filling property when the expanded beads are filled in the mold is as follows. Specifically, a molded article was prepared by the same method as the method described in evaluation of a minimum molding pressure except that expanded beads were filled with an amount of cracking set to 0% in the evaluation of the minimum molding pressure described below. A 100 mm × 100 mm square was drawn at a central portion of the obtained molded article, and a diagonal line was drawn from one corner of the square. The number of voids (gaps) having a size of 1 mm × 1 mm or more present on the diagonal line was counted. In "Evaluation of molded article" columns of the "Filling property" columns of Tables 2 and 3, a symbol "A" in a case where the number of voids is less than 3, a symbol "B" in a case where the number of voids is 3 or more and less than 5, a symbol "C" in a case where the number of voids is 5 or more and less than 8, and a symbol "D" in a case where the number of voids is 8 or more were described. Note that in the present evaluation, the fusion bondability and recoverability of the obtained molded article were not evaluated.

·Minimum molding pressure during in-mold molding

Expanded beads were filled in a mold provided with a cavity having inner dimensions of 300 mm in length × 250 mm in width × 60 mm in thickness, and then steam as a heating medium was supplied into the mold to perform in-mold molding. Before molding, pretreatment pressurization was performed by applying an internal pressure of 0.1 MPa (G) to the expanded beads, and molding was performed with a cracking amount set to 10% (that is, 6 mm). More specifically, the in-mold molding was performed by the following procedure. First, after the mold was closed, an exhaust process of supplying steam from both surfaces of the mold in the thickness direction for 5 seconds to preheat the mold was performed. Subsequently, steam was supplied from one surface side of the mold to perform one-side heating until a pressure lower than the molding pressure at the time of main heating by 0.08 MPa (G) was reached. Next, steam was supplied from the other surface side of the mold to perform one-side heating until a pressure lower than the molding pressure at the time of main heating by 0.04 MPa (G) was reached. Thereafter, steam was supplied from both surfaces of the mold to perform main heating. After completion of the main heating, the pressure in the mold was released, and the molded article was cooled in the mold until the surface pressure due to the expanding force of the molded article reached 0.04 MPa (G). Thereafter, the molded article was taken out from the mold. The released molded article was allowed to stand in an oven at 80°C for 12 hours to perform an aging process. As described above, a molded article having a length of 300 mm × a width of 250 mm × a thickness of 60 mm was obtained.

In the above molding method, in a case where the pressure of steam in the main heating (that is, the molding pressure) was changed by 0.02 MPa between 0.20 MPa (G) and 0.32 MPa (G), the smallest molding pressure at which a good molded article was obtained was defined as the minimum molding pressure. The minimum molding pressure was shown in Tables 2 and 3. Note that a lower minimum molding pressure means a more excellent moldability. The good molded article means a molded article that passes all items in the evaluation of fusion bondability, surface property, and recoverability described below.

<Fusion bondability>

The molded article was bent and broken, the number C1 of expanded beads present on the fracture surface and the number C2 of broken expanded beads were determined, and a ratio of the number of broken expanded beads to the number of expanded beads present on the fracture surface (that is, a material fracture rate) was calculated. The material fracture rate is calculated from a formula $C2/C1 \times 100$. The above measurement was performed five times using different test pieces, and the material fracture rate was obtained for each test piece. Then, when the arithmetic average value of these material fracture rates was 90% or more, it was determined as acceptable.

<Surface property>

A 100 mm × 100 mm square was drawn at a central portion of the molded article, and a diagonal line was drawn from one corner of the square. The number of voids (gaps) having a size of 1 mm × 1 mm or more present on the diagonal line was counted, and it was determined as acceptable when the number of voids was less than 3.

<Recoverability>

In a plan view of the molded article viewed from the thickness direction, a thickness of the molded article at each of four positions 10 mm inward from respective apexes in the center direction and a thickness of the molded article at the central portion were measured. Next, a ratio (unit: %) of the thickness of the thinnest portion to the thickness of the thickest portion among the measured portions was calculated, and it was determined as acceptable when the thickness ratio was 95% or more.

· Water cooling time during in-mold molding

When the in-mold molding was performed at the minimum molding pressure described above, a time from the time point when the main heating was completed to the time point when the surface pressure due to the expanding force of the molded article reached 0.04 MPa (G) was measured, and this time was defined as the water cooling time.

· Density of molded article

The density of the molded article (unit: kg/m$^3$) was calculated by dividing the mass (unit: g) of the molded article obtained by the in-mold molding at the minimum molding pressure described above by the volume (unit: L) obtained from the outer dimension of the molded article and then performing unit conversion.

· Color tone

The color tone was evaluated on the basis of determination of the color depth of the molded article based on the L* value in the CIE 1976 L*a*b* color system and determination of the degree of color unevenness of the molded article. The method for measuring the L* value is as follows. First, 5 positions were randomly selected from a skin surface of the molded article, that is, the surface in contact with the mold during in-mold molding, and the L* value was measured using a spectrophotometer ("SE2000" manufactured by Nippon Denshoku Industries Co., Ltd.). Note that the measurement range was 30 mmΦ, and the measurement method was a reflection method. Then, the arithmetic average value of the L* values obtained at these five measurement positions was defined as the L* value of the molded article. The L* values of the molded articles formed of the expanded beads of Examples and Comparative Examples were as shown in "L* value" columns of "Color tone" columns of Tables 2 and 3. In "Color Depth" columns of "Color tone" columns of Tables 2 and 3, a symbol "A" in a case where the L* value of the molded article was less than 24, a symbol "B" in a case where the L* value was 24 or more and less than 28, and a symbol "C" in a case where the L* value was 28 or more were described. The L* value is an index of brightness, and a lower L* value means higher blackness, that is, black color is deep.

In addition, the degree of unevenness in color tone of the molded article was evaluated on the basis of the results of visual observation of the molded article. Specifically, the color unevenness was evaluated on 5-point scale to classify the color tone into five grades represented by graded scores, one to five, in which (5 point) was given when the surface of the molded article exhibited black color uniformly with no color unevenness and (1 point) was given when color unevenness was found significantly and gray portions were found on the surface here and there, and an average value (evaluation score) of the evaluation scores of five viewers was calculated. In "Color Unevenness" columns of "Color tone" columns of Tables 2 and 3, a symbol "A" in a case where the evaluation score was 4 or more, a symbol "B" in a case where the evaluation score was 3 or more and less than 4, and a symbol "C" in a case where the evaluation score was less than 3 were described. Note that carbon black is not blended in the expanded beads of Reference Examples, and thus the color tone was not evaluated in Reference Examples. Accordingly, a symbol "-" was described in the color tone column in Reference Examples.

[Table 2]

(Table 2)

| | | | Unit | Example 1 | Example 2 | Example 3 | Example 4 | Example 5 | Example 6 | Example 7 |
|---|---|---|---|---|---|---|---|---|---|---|
| Resin Particle | Core Layer | Base Resin | - | PP1 | PP1 | PP1 | PP1 | PP2 | PP2 | PP3 |
| | | Blending Amount of Carbon Black | Parts by Mass | 2.7 | 2.7 | 2.7 | 2.7 | 2.7 | 2.7 | 2.7 |
| | Covering Layer | Base Resin | - | PO1 | PO1 | PO1 | PO2 | PO1 | PO1 | PO1 |
| | | Blending Amount of Carbon Black | Parts by Mass | 2.7 | 2.7 | 2.7 | 2.7 | 2.7 | 2.7 | 2.7 |
| First Expanding Step | | Expanding Temperature | °C | 149.3 | 149.3 | 149.1 | 149.3 | 143.5 | 142.3 | 144 |
| | | Blowing Agent Pressure | MPa(G) | 2.3 | 2.5 | 3.2 | 2.3 | 3.3 | 3.7 | 2.5 |
| | | Releasing Atmosphere Temperature Tu | °C | 75 | 75 | 70 | 75 | 65 | 70 | 70 |
| | | Tmc-Tu | °C | 67 | 67 | 72 | 67 | 74 | 69 | 74 |
| | | Bulk Ratio $M_1$ | Times | 15.0 | 18.0 | 24.7 | 16.5 | 15.2 | 20.9 | 15.0 |
| Second Expanding Step | | Internal Pressure | MPa(G) | 0.5 | 0.5 | 0.5 | 0.6 | 0.5 | 0.5 | 0.5 |
| | | Drum Pressure | MPa(G) | 0.06 | 0.08 | 0.04 | 0.04 | 0.06 | 0.04 | 0.04 |
| Expanded Bead | | Bulk Ratio $M_2$ | Times | 35.3 | 50.0 | 35.3 | 32.1 | 35.2 | 34.8 | 33.4 |
| | | Bulk Density | kg/m$^3$ | 25.5 | 18.0 | 25.5 | 28.0 | 25.6 | 25.9 | 26.9 |
| | | Closed Cell Content | % | 98 | 97 | 96 | 98 | 98 | 98 | 98 |
| | | High Temperature Peak Calorific Value | J/g | 14.5 | 14.1 | 14.1 | 15.2 | 14.5 | 14.0 | 15.0 |
| | | Bulk Ratio $M_2$/Bulk Ratio $M_1$ | - | 2.4 | 2.8 | 1.4 | 1.9 | 2.3 | 1.7 | 2.2 |
| | Filling Property | Angle of Repose | - | A | A | A | A | A | A | A |
| | | Evaluation of Molded Article | - | A | A | A | A | A | A | A |

(continued)

| | | | Unit | Example 1 | Example 2 | Example 3 | Example 4 | Example 5 | Example 6 | Example 7 |
|---|---|---|---|---|---|---|---|---|---|---|
| Molded Article | | Minimum Molding Pressure | MPa(G) | 0.28 | 0.26 | 0.28 | *0.26* | 0.24 | 0.26 | 0.24 |
| | | Water Cooling Time | s | 94 | 84 | 90 | 78 | 62 | 53 | 70 |
| | | Density of Molded Article | kg/m$^3$ | 30.4 | 22.8 | 30.6 | 28.4 | 30.4 | 29.8 | 30.2 |
| | Color Tone | L* value | - | 20.5 | 21.0 | 22.0 | 19.5 | 20.5 | 21.5 | 20.7 |
| | | Color Depth | - | A | A | A | A | A | A | A |
| | | Color Unevenness | - | A | A | A | A | A | A | A |

[Table 3]

[Table 3]

(Table 3)

| | | | Unit | Comparative Example 1 | Comparative Example 2 | Comparative Example 3 | Comparative Example 4 | Comparative Example 5 | Reference Example 1 | Reference Example 2 |
|---|---|---|---|---|---|---|---|---|---|---|
| Resin Particle | Core Layer | Base Resin | - | PP1 | PP1 | PP1 | PP1 | PP1 | PP1 | PP1 |
| | | Blending Amount of Carbon Black | Parts by Mass | 2.7 | 6 | 2.7 | 2.7 | 2.7 | - | - |
| | Covering Layer | Base Resin | - | PO1 | PO1 | - | - | PO1 | PO1 | - |
| | | Blending Amount of Carbon Black | Parts by Mass | 2.7 | 6 | - | - | - | - | - |
| First Expanding Step | | Expanding Temperature | °C | 148.7 | 148.7 | 149.1 | 148.9 | 149.1 | 149.4 | 149.4 |
| | | Blowing Agent Pressure | MPa(G) | 4.2 | 4.2 | 3.1 | 3.7 | 3.2 | 2.0 | 2.0 |
| | | Releasing Atmosphere Temperature Tu | °C | 73 | 74 | 75 | 75 | 75 | 76 | 76 |
| | | Tmc-Tu | °C | 69 | 69 | 67 | 67 | 67 | 66 | 66 |
| | | **Bulk** Ratio $M_1$ | Times | 35.3 | 33.5 | 24.7 | 30.0 | 24.7 | 17.1 | 17.1 |
| Second Expanding Step | | Internal Pressure | MPa(G) | - | - | 0.5 | 0.5 | 0.5 | 0.5 | 0.5 |
| | | Drum Pressure | MPa(G) | - | - | 0.035 | 0.06 | 0.04 | 0.08 | 0.08 |
| Expanded Bead | | Bulk Ratio $M_2$ | Times | 35.3 | 33.5 | 35.3 | 50.0 | 34.6 | 50.0 | 50.0 |
| | | Bulk Density | kg/m$^3$ | 25.5 | 26.9 | 25.5 | 18.0 | 26.0 | 18.0 | 18.0 |
| | | Closed Cell Content | % | 87 | 82 | 95 | 90 | 95 | 98 | 98 |
| | | High Temperature Peak Calorific Value | J/g | 13.9 | 12.8 | 14.4 | 14.3 | 14.2 | 14.0 | 14.5 |
| | | Bulk Ratio $M_2$/Bulk Ratio M, | - | - | - | 1.4 | 1.7 | 1.4 | 2.9 | 2.9 |
| | Filling Property | Angle of Repose | - | B | C | C | D | B | B | C |
| | | Evaluation of Molded Article | - | B | C | C | D | B | B | C |

(continued)

| | | | Unit | Comparative Example 1 | Comparative Example 2 | Comparative Example 3 | Comparative Example 4 | Comparative Example 5 | Reference Example 1 | Reference Example 2 |
|---|---|---|---|---|---|---|---|---|---|---|
| Molded Article | | Minimum Molding Pressure | MPa(G) | 0.30 | 0.36 | 0.30 | 0.30 | 0.28 | 0.26 | 0.30 |
| | | Water Cooling Time | s | 70 | 100 | 92 | 80 | 90 | 76 | 87 |
| | | Density of Molded Article | kg/m$^3$ | 30.8 | 32.5 | 30.6 | 23.0 | 31.0 | 22.9 | 22.8 |
| | Color Tone | L* value | - | 29 | 26 | 22 | 28 | 25 | - | - |
| | | Color Depth | - | C | B | A | C | B | - | - |
| | | Color Unevenness | - | C | B | A | C | C | - | - |

As shown in Table 2, the expanded beads obtained by the production methods of Examples 1 to 7 are excellent in filling property. In addition, by in-mold molding these expanded beads, it is possible to obtain a good expanded beads molded article having high blackness and less noticeable color unevenness. The expanded beads obtained by the ? production method of Examples had a good filling property, high blackness, and small variation in color tone, even in a case where the bulk ratio was high. According to comprasion between Example 1 and Example 3, it can be understood that in a case where the ration $M_2/M_1$ of the bulk ratio $M_2$ of the second-step expanded beads ti the bulk ratio $M_1$ of the first-step expanded beads is 1.8 or more, a molded article having deeper black color can be produced. Furthermore, among Examples 1 to 7, the expanded beads of Examples 5 to 7 had a particularly short water cooling time.

On the other hand, in the production method of Comparative Example 1 shown in Table 3, expanded beads having a bulk ratio similar to those of Example 1 and Examples 3 to 6 are produced by the first-step expanding without performing the second expanding step. Accordingly, in the expanded beads obtained by the production method of Comparative Example 1, the obtained molded article has low blackness and noticeable color unevenness, as compared to the expanded beads obtained by the production methods of Example 1 and Example 3 to 6. In addition, the closed cell content of the expanded beads is also likely to decrease. Furthermore, the filling property of the expanded beads was deteriorated.

In the production method of Comparative Example 2, the blending amounts of carbon black in the core layer and the covering layer were excessively large, and thus the minimum molding pressure was high, and the water cooling time was also long. In addition, the filling property of the resulting expanded beads was decreased.

The expanded beads obtained by the production method of Comparative Example 3 do not have a covering layer in a non-foamed state, and thus they are inferior in filling property as compared to the expanded beads of Examples.

In the expanded beads obtained by the production method of Comparative Example 4, the bulk ratio $M_1$ of the first-step expanded beads is too high, and thus the blackness of the obtained molded article is low, and the variation in color tone tends to be large. In addition, the expanded beads obtained by the production method of Comparative Example 4 do not have a covering layer in a non-foamed state, and thus they are inferior in filling property as compared to the expanded beads of Examples. Note that from the comparison between Comparative Example 3 and Comparative Example 4, it can be understood that the expanded beads of Comparative Example 4 having a higher bulk ratio $M_2$ than that of Comparative Example 3 have a further lower filling property than that of Comparative Example 3. In addition, the expanded beads of Comparative Example 4 have a lower filling property than that of Reference Example 2 described below, and thus it is found that the expanded layer containing carbon black deteriorates the filling property.

In the production method of Comparative Example 5, carbon black is not blended in the covering layer. Accordingly, in the expanded beads obtained by the production method of Comparative Example 5, the obtained molded article has slightly low blackness and tends to have significantly large variation in color tone, as compared to the expanded beads obtained by the production methods of Example 1 and Examples 3 to 5. In addition, the expanded beads obtained by the production method of Comparative Example 5 were inferior in filling property as compared to the expanded beads obtained by the production methods of Example 1 and Examples 3 to 5, because carbon black was not blended in the covering layer.

Reference Example 1 and Reference Example 2 are examples in which carbon black is not blended in either the expanded layer or the covering layer. The expanded beads of Reference Example 1 and Reference Example 2 had a white color tone. When Reference Example 1 and Reference Example 2 were compared, the filling property of the expanded beads obtained in Reference Example 1 was slightly improved as compared to the filling property of the expanded beads obtained in Reference Example 2. On the other hand, in the examples in which carbon black was blended, when Example 1 and Comparative Example 3 having the same configuration except for the presence or absence of the covering layer are compared, it can be understood that the filling property of the expanded beads obtained in Example 1 is much better than the filling property of the expanded beads obtained in Comparative Example 3. Furthermore, also in a case where Example 1 and Comparative Example 5 in which carbon black is not blended in the covering layer are compared, it can be understood that the filling property of the expanded beads obtained in Example 1 is better than the filling property of the expanded beads obtained in Comparative Example 5.

According to the comparison among Examples, Comparative Examples, and Reference Examples, it can be understood that not only the covering layer in the non-foamed state is simply provided on the surface of the expanded layer, but also the covering layer in the non-foamed state in which the specific amount of carbon black is blended is provided, and the expanded beads are produced through the expanding process having two steps as described above, whereby a specific effect of remarkably improving the filling property of the expanded beads can be obtained.

Although the specific aspects of the method for producing polypropylene-based resin expanded beads according to the present invention have been described above on the basis of Examples, the specific aspects of the method for producing polypropylene-based resin expanded beads according to the present invention are not limited to the aspects of Examples, and the configuration can be appropriately changed without impairing the gist of the present invention.

**Claims**

1. A method for producing a polypropylene-based resin expanded bead, the method comprising:

    a dispersing step of dispersing polypropylene-based resin particles in a dispersion medium, the polypropylene-based resin particles each including

        a core layer comprising a polypropylene-based resin as a base resin, and carbon black blended into the polypropylene-based resin in an amount of 0.1 parts by mass or more and less than 5 parts by mass with respect to 100 parts by mass of the polypropylene-based resin, and
        a covering layer, which covers the core layer, comprising a polyolefin-based resin as a base resin, and carbon black blended into the polyolefin-based resin in an amount of 0.1 parts by mass or more and less than 5 parts by mass with respect to 100 parts by mass of the polyolefin-based resin;

    a first expanding step of impregnating the polypropylene-based resin particles in the dispersion medium with an inorganic physical blowing agent in a sealed container, and then releasing the polypropylene-based resin particles together with the dispersion medium from the sealed container into an atmosphere having a lower pressure than a pressure inside the sealed container to thereby expand the core layer of each of the polypropylene-based resin particles to obtain first-step expanded beads having a bulk ratio of 5 times or more and 25 times or less; and
    a second expanding step of further expanding the first-step expanded beads by heating the first-step expanded beads after increasing a pressure in cells of the first-step expanded beads to obtain polypropylene-based resin expanded beads, wherein
    a ratio $M_2/M_1$ of a bulk ratio $M_2$ of the polypropylene-based resin expanded beads to a bulk ratio $M_1$ of the first-step expanded beads is 1.2 or more and 3.0 or less, the bulk ratio being measured as disclosed in the description.

2. The method for producing a polypropylene-based resin expanded bead according to claim 1, wherein the ratio $M_2/M_1$ of the bulk ratio $M_2$ of the polypropylene-based resin expanded beads to the bulk ratio $M_1$ of the first-step expanded beads is 1.8 or more and 3.0 or less.

3. The method for producing a polypropylene-based resin expanded bead according to claim 1 or 2, wherein in the first expanding step, a temperature Tu of the atmosphere into which the polypropylene-based resin particles are released is 40°C or higher and lower than 80°C.

4. The method for producing a polypropylene-based resin expanded bead according to any one of claims 1 to 3, wherein a melting point Tms of the polyolefin-based resin as the base resin of the covering layer is lower than a melting point Tmc of the polypropylene-based resin as the base resin of the core layer.

5. The method for producing a polypropylene-based resin expanded bead according to any one of claims 1 to 4, wherein the bulk ratio $M_2$ of the polypropylene-based resin expanded beads is 30 times or more and 75 times or less.

6. The method for producing a polypropylene-based resin expanded bead according to any one of claims 1 to 5, wherein the carbon black is carbon black for coloring having a dibutyl phthalate oil absorption amount of less than 150 mL/100 g, measured as disclosed in the description.

7. The method for producing a polypropylene-based resin expanded bead according to any one of claims 1 to 6, wherein the polypropylene-based resin as the base resin of the core layer is an ethylene-propylene-butene copolymer or a propylene-butene copolymer, and a butene component content in these copolymers is 2 mass% or more and 15 mass% or less.

8. A method for producing a molded article of expanded beads, the method comprising filling the polypropylene-based resin expanded beads obtained by the method according to any one of claims 1 to 7 into a mold for molding, and thereafter performing in-mold molding of the expanded beads by supplying a heating medium into the mold to produce a molded article of the polypropylene-based resin expanded beads.

**Patentansprüche**

1. Verfahren zum Produzieren eines polypropylenbasierten expandierten Harzkügelchens, umfassend:

   einen Dispersionsschritt zum Dispergieren von polypropylenbasierten Harzteilchen in einem Dispersionsmedium, welche polypropylenbasierten Harzteilchen jeweils

   eine Kernschicht, die ein polypropylenbasiertes Harz als ein Basisharz und Ruß, der in das polypropylenbasierte Harz in einer Menge von 0,1 Teilen nach Masse oder mehr und weniger als 5 Teilen nach Masse in Bezug auf 100 Teile nach Masse des polypropylenbasierten Harzes gemischt ist, aufweist, und
   eine Deckschicht, die die Kernschicht bedeckt und ein polyolefinbasiertes Harz als ein Basisharz und Ruß, der in das polyolefinbasierte Harz in einer Menge von 0,1 Teilen nach Masse oder mehr und weniger als 5 Teilen nach Masse in Bezug auf 100 Teile nach Masse des polyolefinbasierten Harzes gemischt ist, aufweist, aufweisen;

   einen ersten Expansionsschritt zum Imprägnieren der polypropylenbasierten Harzteilchen in dem Dispersionsmedium mit einem anorganischen physikalischen Treibmittel in einem abgedichteten Behälter, und dann Freisetzen der polypropylenbasierten Harzteilchen zusammen mit dem Dispersionsmedium aus dem abgedichteten Behälter in eine Atmosphäre mit einem geringeren Druck als ein Druck innerhalb des abgedichteten Behälters, so dass dadurch die Kernschicht jedes der polypropylenbasierten Harzteilchen expandiert wird, so dass expandierte Erststufenkügelchen mit einem Schüttverhältnis von 5-mal oder mehr und 25-mal oder weniger erhalten werden; und
   einem zweiten Expansionsschritt zum weiteren Expandieren der expandierten Erststufenkügelchen durch Erhitzen der expandierten Erststufenkügelchen nach Erhöhen eines Drucks in Zellen der expandierten Erststufenkügelchen, so dass polypropylenbasierte expandierte Harzkügelchen erhalten werden, bei dem
   ein Verhältnis $M_2/M_1$ eines Schüttverhältnisses $M_2$ der polypropylenbasierten expandierten Harzkügelchen zu einem Schüttverhältnis $M_1$ der expandierten Erststufenkügelchen 1,2 oder
   mehr und 3,0 oder weniger beträgt, welches Schüttverhältnis wie in der Beschreibung offenbart gemessen wird.

2. Verfahren zum Produzieren eines polypropylenbasierten expandierten Harzkügelchens nach Anspruch 1, bei dem das Verhältnis $M_2/M_1$ des Schüttverhältnisses $M_2$ der polypropylenbasierten expandierten Harzkügelchen zu dem Schüttverhältnis $M_1$ der expandierten Erststufenkügelchen 1,8 oder mehr und 3,0 oder weniger beträgt.

3. Verfahren zum Produzieren eines polypropylenbasierten expandierten Harzkügelchens nach Anspruch 1 oder 2, bei dem in dem ersten Expansionsschritt eine Temperatur Tu der Atmosphäre, in die die polypropylenbasierten Harzteilchen freigesetzt werden, 40°C oder höher und niedriger als 80°C ist.

4. Verfahren zum Produzieren eines polypropylenbasierten expandierten Harzkügelchens nach einem der Ansprüche 1 bis 3, bei dem ein Schmelzpunkt Tms des polyolefinbasierten Harzes als das Basisharz der Deckschicht niedriger als ein Schmelzpunkt Tmc des polypropylenbasierten Harzes als das Basisharz der Kernschicht ist.

5. Verfahren zum Produzieren eines polypropylenbasierten expandierten Harzkügelchens nach einem der Ansprüche 1 bis 4, bei dem das Schüttverhältnis $M_2$ der polypropylenbasierten expandierten Harzkügelchen 30-mal oder mehr und 75-mal oder weniger beträgt.

6. Verfahren zum Produzieren eines polypropylenbasierten expandierten Harzkügelchens nach einem der Ansprüche 1 bis 5, bei dem der Ruß Ruß zum Färben mit einer Dibutylphthalat-Ölabsorptionsmenge von weniger als 150 mL/100 g, wie in der Beschreibung offenbart gemessen, ist.

7. Verfahren zum Produzieren eines polypropylenbasierten expandierten Harzkügelchens nach einem der Ansprüche 1 bis 6, bei dem das polypropylenbasierte Harz als das Basisharz der Kernschicht ein Ethylen-Propylen-Buten-Copolymer oder ein Propylen-Buten-Copolymer ist, und ein Buten-Komponentengehalt in diesen Polymeren 2 Masse% oder mehr und 15 Masse% oder weniger beträgt.

8. Verfahren zum Produzieren eines geformten Artikels aus expandierten Kügelchen, welches Verfahren ein Füllen der polypropylenbasierten expandierten Harzkügelchen, die durch das Verfahren nach einem der Ansprüche 1 bis 7 erhalten werden, in eine Form zum Formen und danach ein Durchführen eines Formens der expandierten Kügelchen in der Form durch Zuführen eines Erhitzungsmediums in die Form zum Produzieren eines geformten Artikels aus den polypropylenbasierten expandierten Harzkügelchen umfasst.

**Revendications**

1. Procédé de production d'une particule de mousse de résine à base de polypropylène, le procédé comprenant :

   une étape de dispersion pour disperser des particules de résine à base de polypropylène dans un milieu de dispersion, les particules de résine à base de polypropylène comprenant chacune
   une couche centrale comprenant une résine à base de polypropylène comme résine de base, et du noir de carbone mélangé à la résine à base de polypropylène dans une quantité égale ou supérieure à 0,1 partie en masse et inférieure à 5 parties en masse par rapport à 100 parties en masse de la résine à base de polypropylène, et
   une couche de recouvrement, qui recouvre la couche centrale, comprenant une résine à base de polyoléfine comme résine de base, et du noir de carbone mélangé à la résine à base de polyoléfine dans une quantité égale ou supérieure à 0,1 partie en masse et inférieure à 5 parties en masse par rapport à 100 parties en masse de la résine à base de polyoléfine ;
   une première étape de moussage consistant à imprégner les particules de résine à base de polypropylène dans le milieu de dispersion avec un agent gonflant physique inorganique dans un récipient scellé, puis à libérer les particules de résine à base de polypropylène avec le milieu de dispersion du récipient scellé dans une atmosphère ayant une pression inférieure à la pression à l'intérieur du récipient scellé afin de mousser la couche centrale de chacune des particules de résine à base de polypropylène pour obtenir des particules de mousse de première étape ayant un rapport de dilatation volumique de 5 fois ou plus et de 25 fois ou moins ; et
   une deuxième étape de moussage consistant à mousser additionnellement les particules de mousse de la première étape en chauffant les particules de mousse de la première étape après avoir augmenté une pression dans des cellules des particules de mousse de la première étape pour obtenir des particules de mousse de résine à base de polypropylène, où
   un rapport $M_2/M_1$ entre le rapport de dilatation volumique $M_2$ des particules de mousse de résine à base de polypropylène et le rapport de dilatation volumique $M_1$ des particules de mousse de la première étape est supérieur ou égal à 1,2 et inférieur ou égal à 3,0, le rapport de dilatation volumique étant mesuré comme indiqué dans la description.

2. Procédé de fabrication d'une particule de mousse de résine à base de polypropylène selon la revendication 1, dans lequel le rapport $M_2/M_1$ du rapport de dilatation volumique $M_2$ des particules de mousse de résine à base de polypropylène au rapport de dilatation volumique $M_1$ des particules de mousse de la première étape est supérieur ou égal à 1,8 et inférieur ou égal à 3,0.

3. Procédé de fabrication d'une particule de mousse de résine à base de polypropylène selon la revendication 1 ou 2, dans lequel, lors de la première étape de moussage, la température Tu de l'atmosphère dans laquelle les particules de résine à base de polypropylène sont libérées est supérieure ou égale à 40°C et inférieure à 80°C.

4. Procédé de fabrication d'une particule de mousse de résine à base de polypropylène selon l'une quelconque des revendications 1 à 3, dans lequel le point de fusion Tms de la résine à base de polyoléfine comme résine de base de la couche de recouvrement est inférieur au point de fusion Tmc de la résine à base de polypropylène comme résine de base de la couche centrale.

5. Procédé de fabrication d'une particule de mousse de résine à base de polypropylène selon l'une quelconque des revendications 1 à 4, dans lequel le rapport de dilatation volumique $M_2$ des particules de mousse de résine à base de polypropylène est de 30 fois ou plus et de 75 fois ou moins.

6. Procédé de fabrication d'une particule de mousse de résine à base de polypropylène selon l'une quelconque des revendications 1 à 5, dans lequel le noir de carbone est un noir de carbone pour la coloration ayant une quantité d'absorption d'huile de phtalate de dibutyle inférieure à 150 mL/100g, mesurée comme indiqué dans la description.

7. Procédé de fabrication d'une particule de mousse de résine à base de polypropylène selon l'une quelconque des revendications 1 à 6, dans lequel la résine à base de polypropylène comme résine de base de la couche centrale est un copolymère éthylène-propylène-butène ou un copolymère propylène-butène, et la teneur en butène de ces copolymères est supérieure ou égale à 2 % en masse et inférieure ou égale à 15 % en masse.

8. Procédé de fabrication d'un article moulé en particules de mousse, comprenant le remplissage des particules de mousse de résine à base de polypropylène obtenues par le procédé selon l'une quelconque des revendications 1 à 7 dans un moule pour le moulage, puis le moulage dans le moule des particules de mousse en fournissant un milieu chauffant dans le moule pour produire un article moulé en particules de mousse de résine à base de polypropylène.

FIG. 1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 7300537 A

- JP 2018162369 A

**Non-patent literature cited in the description**

- Polymer Analysis Research Council. Polymer Analysis Handbook. Japan Society for Analytical Chemistry, January 1995